(19) Europäisches Patentamt
European Patent Office
Office européen des brevets

(11) **EP 2 634 153 A1**

(12) **EUROPEAN PATENT APPLICATION**

(43) Date of publication:
04.09.2013 Bulletin 2013/36

(51) Int Cl.:
*C04B 28/02* (2006.01) *C04B 40/00* (2006.01)
*C04B 20/10* (2006.01)

(21) Application number: 12001307.3

(22) Date of filing: 28.02.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Omya Development AG
4665 Oftringen (CH)

(72) Inventors:
• Skovby, Michael
8706 Meilen (CH)
• Gonnon, Pascal
01480 Villeneuve (FR)

(74) Representative: Richebourg, Michel François
Cabinet Michel Richebourg
"Le Clos du Golf"
69, rue Saint-Simon
42000 Saint Etienne (FR)

(54) **Process for the preparation of cement, mortars, concrete compositions containing a calcium carbonate-based filler containing an aluminosiliceous material, the said "filler(s) blend" being treated with a superplastifier, cement compositions and cement products obtained, and their applications.**

(57) PROCESS for the preparation of cement / mortar / concrete compositions or systems, (for simplicity hereafter "cement" compositions or systems), featuring an improved compressive strength Rc namely at 28 days and 90 days, containing at least a "carbonate-based filler", comprising at least one step where the said at least one "carbonate-based filler" is mixed or blended with at least one aluminosiliceous material , and the obtained "fillers blend" is treated with an efficient treating amount of at least one treating agent consisting of or comprising superplastifier(s) ; PRODUCT comprising at least a " carbonate-based "filler" " as defined and at least an aluminosiliceous material, what provides a "fillers blend" ; CEMENT COMPOSITIONS, USE of the said "Fillers(s) blends" and cement composition ; CEMENT ELEMENTS or CEMENT PRODUCTS" obtained from the said "cements compositions", such as construction or building blocks.

Fig. 1

EP 2 634 153 A1

**Description**

**TECHNICAL FIELD OF THE INVENTION**

The present invention relates to the field of cement compositions, cementitious compositions, hydraulic binders compositions, mortar compositions, concrete "compositions" (or hereafter equivalently "systems"), namely of the type compositions (or "systems") of cement/hydraulic binders, mortars, concrete, containing at least one particulate mineral of the calcium carbonate(s) type as a filler, and their applications, as well as the corresponding cement, mortar, concrete products or elements, the said filler containing at least one carbonate-based filler replaced at least partially with at least on organosiliceous material, what forms a "fillers blend" which is then treated with a superplastifier.

The invention relates to a specific process for producing the said compositions or "systems" (**those terms are going to be used as equivalents in this application and claims**) for cement, hydraulic binder, mortar, concrete, the obtained compositions, the cement, mortars and concrete products obtained therefrom, and their applications.

**PRIOR ART**

It is reminded that a cement system (or equivalently "composition") is a system comprising cement particles, mixing water (or equivalently a mixing aqueous composition not interfering with the said system, as known to the skilled man), filler(s), various optional and usual additives such as air entrainment agents, setting retarders, setting accelerators and the like, and any such routine additives as well known to the skilled man.

A mortar system **additionally** contains an inert aggregate material, usually a sand.

A concrete system **still additionally** contains gravel.

The above is abundantly known and common knowledge.

**Definition :**

-    *cement systems or compositions or slurries :* as a matter of simplicity, and also because the invention relates to the use of additives adapted to improve the properties of any of those three systems, the terms **"cement systems" (or "compositions") (or "slurries") (or "cement")** will be used in the following to encompass **ANY** of the above cited main kinds of compositions or "systems", that is a cement, cementitious, hydraulic binder, mortar or concrete composition or system. The skilled man will be able to appreciate if the system is a cement, a mortar or a concrete composition in view of the presence, or the absence, of sand and/or gravel. This simplification is made possible since sand and gravel are inert materials, and therefore do not noticeably interfere with the invention.

It is also pointed out that, even if, in the following, an information is provided regarding "cement systems" or "cements" for example, it ALSO applies *mutatis mutandis* to any of the other kinds of systems, namely mortars and concretes. The only difference between the above main types of "compositions" (or equivalently "systems") being the presence, or not, of sand and/or gravel.

In such compositions, fluidifier(s) is/are often used.

In that domain, the EP 0 663 892 to CHRYSO is certainly the most relevant document, which discloses fluidifier polymers for mineral suspensions with no hydraulic setting , or hydraulic binders slurries.

Cited applications are paper coating, paints, and synthetic resins or rubber compositions.

According to the said prior art, it was known to add fluidifiers in mineral, particular suspensions to lower their viscosity, and, especially for paper applications, this leads to high mineral concentrations, a better workability, and this reduces the drying energy. For example, this is used in connection with suspensions of calcium carbonate.

It is also known to add such fluidifiers to "cement" **(in the wide sense explained hereabove)** slurries, with the purpose this time of reducing their water content "water-reducing additives" (Chryso Premia 196™) and to obtain a "cement" composition with a "more dense structure" after setting.

Encountered problems are: the influence of electrolytes, which reduces the fluidifying effect and forces to increase the amount of fluidifier (with an increase in cost), as well as, for "cement", the need not to negatively alter the setting characteristics of the cement composition not its final properties.

Some well-known fluidifiers are superplastifiers or plastifiers.

In that domain, the EP 0 663 892 to CHRYSO is relevant, as well as FR 2 815 627, FR 2 815 629 and WO2008/107790 which also disclose interesting superplastifiers.

Some known fluidifiers affect less the setting time, but are still unsatisfactory, such as condensation products of sulfonated naphtalene and formaldehyde or melamine-formaldehyde with a sulfonated compound. Some of those products are also superplastifiers, but much less preferred.

Also, EP 0 099 954 relates to fluidifiers made by condensation of amino-sulfonic acid comprising at least an aromatic ring with nitrogenated compounds bearing several amine functions and formaldehyde.

Such are said not to delay too much the setting of cement compositions, but they are highly sensitive to electrolytes when it comes to their "activity". They also can be obtained with low concentrations, usually no more than about 40% by dry weight, since any concentration increase in turn increases their viscosity to inadmissible levels.

The summary of the desired properties is listed page 3 lines 15 ff of the above-mentioned EP.

It is also known to add filler(s) in cement, hydraulic binders, cementitious or concrete or mortars compositions or "systems".

The purpose of adding such filler(s) is to fill the voids between particles, to reduce the overall costs, and to greatly improve a property called "consistency" (consistency being the capacity or ability for the considered systems to easily flow or "self-level", or not) and a property called "compacity" (that is the percentage of dry material in the final composition (the higher the percentage, the better the compacity)).

Finally, EP 10 008 803.8 describes the treatment of calcium carbonate based filler(s) (see definition herebelow) with certain superplastifiers optionally admixed with certain plasticizers and optionally fluidifiers in order to upgrade "low" or "dry" grade (or "standard") "cement systems" (not usable in the modern industry as explained in detail in the said application and herebelow for completeness) to at least "plastic" and most preferably "fluid" "cement systems" which can be used with great advantages in the modern industry.

Superplastifiers and namely products A and B are disclosed in WO2004/041882, and especially with reference to the polymers disclosed in the Examples.

**Definition:**

- **calcium carbonate - based filler(s)** : in the present application, the said filler(s) are defined as "calcium carbonate - based filler(s)" that is, in this application and claims, fillers that contain(s) *only* calcium carbonate(s) (possibly of various origins, such as various natural rocks or various PCCs) - which means with *no other filler of a different type,* such as kaolin, bentonite, etc... known to the skilled man - and is/are preferably provided (when the filler(s) is/are or contain(s) GCC(s)) by a carbonated rock or more generally mineral material(s) comprising at least 50 - 65 % by weight (dry) of $CaCO_3$, preferably more than 80 %, still more preferably more than 90 %; those carbonate-based filler(s)s are selected among:

- natural calcium carbonate(s) or ground calcium carbonate(s) (GCC(s)) such as, non limitatively, GCC from marble, chalk, calcite, or from other natural and well-known forms of natural calcium carbonates, which most preferably meet the above % criteria;

- PCC(s) which is a precipitated calcium carbonate, of fine or ultrafine granulometry, such as none limitatively 1.52 $\mu$m for d50 , and exists under various well-known forms, depending on the well-known precipitation/preparation process.

- or mixtures or blends of said $CaCO_3$ - containing rocks or mineral materials with each other as well as blends or mixtures of GCC(s) and PCC(s) and optionally blends of PCCs.

The GCC / PCC ratio can be chosen from 0 - 100 to 100 - 0 % by dry weight, preferably from 30 - 70 to 70 /30 % by dry weight.

Usually a "filler" has the following properties:

- Purity (methylene blue test) is lower than 10 g/ kg , preferably below 3 - 5 g/kg, preferably below 1 - 1,5 g , with a most interesting value at 1.2 g/kg.

- Mean diameter or $d_{50}$ is about in the range of **1 - 3 to 30 - 50 micrometres** measured by using the Malvern 2000 PSD equipment/methodology, or Sedigraph.

- Blaine surface, which is a characteristic feature of FILLERS, as is well-known, is in the domain **of 180 - 2000 m$^2$ / kg,** preferably of **300 to 800 m$^2$ / kg,** as measured under an EU Standard (European standard EN 196 - 6).

As will be seen below, the d50 range of 1 - 5 -6 microns corresponds, for the fillers featuring a Blaine surface above about 1000 m2/g, to **ultrafine fillers (UFs)**; above 6 is the domain of coarser or coarse fillers, hereafter **"fillers"** .

*In this application, when ultrafine fillers are considered, the wording "ultrafine " or "ultrafine fillers" or "UF" will be used.*

In the present application, the said carbonate-based filler(s) can be

- ultrafine filler(s) (see definition herebelow) and / or

- coarser or coarse filler(s) (of the calcium carbonate containing type as defined above).

**Definition:**

- in the present application, **"aluminosiliceous material"** is a product or blend of products mainly made of siliceous product(s) and/or aluminous product(s). **"Mainly"** means that the said products may contain only a minor amount of non aluminosiliceous products, such as impurities etc..., as a result of the industrial production, as is well known from the skilled man.

Such products are preferably selected among aluminum oxides such as various forms of Al2O3, silica fumes (SF) such as various forms of SiO2 or SiO2 fumes, calcined kaolin or "metakaolin" (MK), pozzolanic products (used by cement industry) such as blast furnace slags (see **EN - 197 - 1**), ultrafine siliceous products from the industry etc., and preferably blends of globally speaking Al2O3/SiO2.

Non limitative examples are:

- Sifraco™ C800 containing 98% SiO2 and a minor amount (0.71%) of Al2O3, and traces of CaO and MgO (this is an illustration of the above wording "mainly"); SSP = 7.49 (surface measurement since the fineness is too high for a Blaine measurement) ; d50 (median diameter) = 1.86 micron

- Condensil™ S95 D which is a silica fume obtained while preparing silicium d50= 1.2 micron Blaine > 1600 m$^2$/kg BET (specific surface area measured using nitrogen and BET method according to ISO 9277) BET = 16 m$^2$/g

- Pieri ™ (Grace™) Premix MK : this product is a metakaolin of d50 = 3 microns Blaine : too fine BET = 3.8 m$^2$/g

- Hauri™ Phonolit d50 = 14 microns BET = 6.12 m$^2$/g

**"Ultrafines particles"** or more simply **"ultrafines"** or still more simply **"UFs"** which can be used in the present invention can be defined by

- a d50 from about 1 micron to about 5 or 6 microns, preferably from 1 to 3 microns, and still better of about 2 - 3 microns, usually <5 microns.

- **and**

- a high specific surface , usually defined as BLAINE > 1000 m$^2$/kg pref. > 1500 m$^2$/kg , pref. up to 2000 m$^2$/kg.

- Reference can be taken as to CaCO3 additives ("additions calcaires") to a cement from **NF P 18 - 508 (2012-01)** , see 4.3.1 (Blaine) (NF EN 196-6) and 4.3.2 which defines the "Highly Fine" additives as having namely a d50 < 5 microns; which also refers to the "bleu de méthylène" test (NF EN 13639)(4.2.6) and other interesting definitions.

Quite representative examples of such useful UFs are :

- silica fumes (1 - 2 microns),

- metakaolin (that is calcined kaolins, 3 to 5 - 6 microns), chalks of 1 to 5 microns d50,

- calcites such as d50 about 1 micron,

- Millicarb™ (about 3 microns d50), white limestone of about 1 to 5 - 6 microns d50,

- Durcal 1 or 2 (d50 1 resp. 2 microns),

- "Etiquette violette" ("EV") (about 2.4 micron d50),

- blast furnace slags d50 = 2.5 microns Blaine: too fine BET = 2.7 $m^2$/g

Preferred UFs to be used in the present invention are : EV™, silica fume SF, Condensil S95, metakaolin MK , namely Premix MK, Betocarb SL™ 1 or 2 and their mixtures.

Modified calcium carbonate (MCC) (such as of d50 = 2.29 $\mu$m) which is disclosed in US 6,666,953 , and ultrafine PCC (namely d50 = 1.52 $\mu$m) can also be used as UF(s) .

- As is known, a **"cement" (in the above mentioned wide sense)** composition or "system" is mainly made of:

   Cement (or cementitious composition or hydraulic binder) + mixing water or mixing aqueous composition allowing setting but not interfering with the system) + optionally (usually inert) particulate and/or fibrous filler(s) + inert agglomerate(s) such as optionally sand + optionally inert gravel (plus optionally well known additives not to be mentioned in detail nor in full in the present application, such as setting accelerators, setting retarders, air entrainment agents, etc...) + miscellaneous "routine" additives aimed at matching the precise need of the end-user.

As to the setting time the skilled man may refer to the DIN Standard EN 196-3 .

Aggregates such as sand, inert gravel or "all - in" aggregates are known materials so commonly used that no description is needed here.

As discussed above, the invention relates also equivalently (under the generic term "cement" for simplicity) to **mortars** compositions or "systems" (like above including an aggregate like sand but no gravel) and **cement** compositions (same as above but no gravel and no sand).

- **"Mainly"** means here that the system may contain some impurities or traces of additives or adjuvants, not to be mentioned in the present application, such as air entrainment agents, accelerators, retarders, etc.

- **"Mixing water"** will mean in this patent application plain mix water or aqueous mixing compositions, that is mainly water plus usual additives, allowing the normal setting of the "cement" compositions, without interfering with the other properties of the overall composition, or only, via the additives, to improve some usual properties.

In this whole application and claims, **"inert"** shall mean a material which has no noticeable (or negligible) impact or interference with the process of the invention and the obtained compositions, products and applications. Given the involved ingredients, this will be easily appreciated by any skilled man.

The prior art "cement" (in the wide sense as defined above) systems to date are therefore mainly made of:

Cement (or hydraulic binders or cementitious compositions) + mixing water (or mixing aqueous compositions not interfering with the system) + optionally aggregate(s) such as sand + optionally gravel + FILLER(s) + "routine" additives.

It is also known that cement / hydraulic binders / cementitious compositions, cements, mortars and concrete compositions can be basically sorted out into:

**DRY** systems (**poor** quality or **"low"**) (casting is performed with high vibration and energy).

**PLASTIC** systems (**medium** quality) ( medium vibration and energy).
(The two above categories may also be named "**standard**")

**FLUID** systems **(High performance or "HP")** (low vibration and low energy).

A very simple test is used to classify the systems, using a "mini cône à chape" known as **"self-levelling test"** or **"screed flow cone test"**.

The test is well known and is conducted according to the recognized **Standard EN 196 - 1.**

In order to provide the skilled man with useful guidelines and information about the meaning of "low", "medium" or "HP" filler, we attach the **TABLE A** where ten fillers A to K of various origin and morphology (as indicated for characterization by the skilled man) have been tested for various properties and qualities, or drawbacks, with the classification "low" "medium" or "HP" being added on each line.

TABLE A

| Characterization of "low", "medium", "HP" fillers and their aspect | | | | | | | | | |
|---|---|---|---|---|---|---|---|---|---|
| Treatment Agent Code | geological designation (age) | Type | d50 | Blaine | Blue (Methylene Blue Test) | (3g) | (4g) | Evaluation | visual evaluation |
| A | white chalk facies (90 Mi) | chalk | 1,0 | >1400 | 2,0 | plastic aspect | 220 | low | slow, very thick |
| B | white chalk facies (90 Mi) | chalk | 2,2 | 1120 | 2,7 | 280 | 340 | medium | thick |
| C | urgonian facies (115 Mi) | calcite | 3,1 | 1171 | 0,3 | 200 | 290 | low | slow, thick |
| D | bioclastic facies (160Mi) | calcite | 6,0 | 720 | 1,0 | plastic aspect | 338 | medium | plastic |
| E | urgonian facies (115 Mi) | calcite | 6,5 | 395 | 0,3 | 460 | 475 | HP | fluid |
| G | upper jurassic (130 Mi) | marble | 17,0 | 363 | 0,3 | dry aspect | 365 | medium | slow, heavy |
| H | upper jurassic (120 Mi) | marble | 13,4 | 385 | 0,3 | 337 | 413 | low | slow, viscous |
| I | H + 5%B | X | X | X | X | 190 | 390 | medium | slow, viscous |
| J | H + 15%B | X | X | X | X | 427 | 436 | HP | fluid |
| K | H + 20%B | X | X | X | X | 340 | 410 | medium | fluid, thick |

One uses 3 g or respectfully 4 g of fluidifier/superplastifier **Premia 196**™ commercialised by the Firm **CHRYSO**, and which is a commercial product said to be a "modified polycarboxylate" at a concentration of 25.3 % by weight (dry extract measured along the **Standard EN 480 - 8)**, by DRY weight of cement.

In the said **Table A** , " + 15 % B " evidently means an addition of 15 % of the product B, to form a blend or mix, the % being in DRY WEIGHT / DRY MIX WEIGHT.

Equally, columns "3g" and "4g" means that 3 or respectfully 4 g of the said superplastifer have been added by DRY weight of the cement component alone.

"Mi" means "million years" (dating of the rock)

"Blue" means "methylene blue test" (purity test)

European patent applications in the name of the Applicant are filed on the same day as the present application and cover in great detail technical solutions aimed at upgrading a low or medium filler to an HP or fluid level.

**TECHNICAL PROBLEM**

There exists a constant need for cement or mortar or concrete systems or compositions having a improved **compacity** (% of dry material, the highest possible), an improved **flowability** (that is forming a non sticky "galette" or "cone" of large diameter in the above described test, the larger the diameter, the better flowability), and globally speaking a definitely improved **"workability"** (workability being the ability of the cement or concrete composition to be prepared, processed, handled, and used to form a high performance or "technical" concrete) and a far better **"regularity"** in the final product properties especially at the end user level.

Clearly, some of those desired properties are antagonistic, and for example one should expect a high % dry material to perform poorly in a flowability test.

This being stated, the main purpose of this invention is to design new industrial products and to build a process aimed at providing improved mechanical strength properties at an "early age" or "short term" ("aux jeunes ages") of 7 days (7d), or over the long run such as after 28 to 90 days (28d to 90d).

## BRIEF SUMMARY OF THE INVENTION

The use of the above aluminosiliceous material as fillers for cement composition is known on a theoretical basis. However, the skilled man knows above all that above 5%/dry weight of cement composition those fillers make it mandatory to increase the mix water content and to increase the proportion of water demand reducing fluidifier such as CHRYSO Premia 196™ ; otherwise, due to their high fineness, the viscosity of the cement composition increases and the cement composition becomes Unworkable. It is reminded that the viscosity must in practice remain <800cps. To reach or maintain such a low viscosity would require the introduction of too high a proportion of fluidifier, up to a point of non compatibility between the cement and the fluidifier.

It has now been found according to the invention that it is possible to overcome those problems, and to reach high values for mechanical strength at, namely, 7d, and especially at 28d and 90d, by preparing a new industrial PRODUCT characterized in that it comprises:

a) at least a carbonate-based "filler"
and at least an aluminosiliceous material as defined above, what provides a "fillers blend"
b) the said "fillers blend" having been treated with at least a superplastifier of the polycarboxylate ether type.

*It is to be understood that a part of the usual carbonate-based filler(s) is replaced by the alumino-siliceous material.*

The said carbonate-based filler(s) comprises or consists of at least a coarse carbonate-based filler, see the definition above) such as GCC (coarse) and/or PCC (usually fine to ultrafine) and/or at least an UF.

UFs are usually "HP" fillers.

Coarse carbonate-based fillers can be "low, medium or HP" fillers.

According to the invention, on can use either low or medium, or HP carbonate-based fillers. If the carbonate-based filler or filler(s) is/are low or medium, they will basically remain low or medium. If HP, they will remain HP due to the combination with the superplastifier.

The invention resides first in a

- **PROCESS** for the preparation of the above defined cement / mortar / concrete compositions or systems, (for simplicity hereafter "cement" compositions or systems), of a general known type as defined hereabove containing at least a carbonate-based filler, characterized in that it comprises at least one step where the said at least one carbonate-based filler is mixed with at least one aluminosiliceous material as defined hereabove, and the obtained "fillers blend" is treated with an efficient treating amount of at least one treating agent consisting of or comprising superplastifier(s).

The treatment with at least a superplastifier is believed to treat only the calcium carbonate(s) part of the filler (s), and for example not the alumino-siliceous material, other particulate or fibrous fillers, IF ANY , believed to be inert in this process.

By "comprising or consisting of" we mean that the fillers may consist of calcium carbonate(s), partially replaced as mentioned with at least an alumino-siliceous material, the said fillers blend being optionally mixed with non interfering fillers, and that the treating agent(s) can be: only superplastifier(s) or blends of superplastifier(s) with non-interfering plasticizer(s) (as defined herebelow) and/or routine, inert, additives, such as a routinely used "bottom-tank" fluidifier.

By "efficient treating (or "treatment") amount" or "efficient surface coverage of the fillers particles or grains " or "efficiently treated", we mean in this application that at least 50 %, preferably at least 60, or better at least 80 or 90 % or still better closer to 100 % of the surface of the particles of the carbonate based filler(s) have been subjected to a physico-chemical interaction with the superplastifier(s). This physico-chemical interaction is not entirely understood as of the filing date, only the EFFECTS and RESULTS are duly identified and correlated to the treating superplastifier(s), but, without being tied by any theory, the applicant considers that the said interaction or "treatment" is a surface treatment or "surface-covering" treatment involving ionic, physical, mechanical and/or chemical, treatment(s) and via said interaction (s). This efficient treating or treatment amount must therefore be important enough to treat the said % of particle surfaces, as will be explained and disclosed in more detail below.

By "surface - covering" we mean that the superplasticizers are supposed by the applicant, without being tied by a theory, to engage in electrical charge potential interactions with the ionic charges of the surface of the fillers, which promotes the fixation of the superplastifier onto and/or closely around the surface and so reduces the "accessible" surface of the particle having no surface saturation of the grain by said treatment.

By "comprising" we mean in this application that the treating agent can be made only of superplastifier(s) (one or more mixed together, preferably one) or of blends of superplastifier(s) displaying mutual non-interference (that is, unable to noticeably degrade the above "treatment" ) amount or proportion of known plasticizer(s) for the purpose of cost-saving, as explained in greater detail here-below

Process Options

1 According to the best mode of the invention, as defined to date, the said filler(s) blend is/are efficiently treated with the superplastifier(s) before being introduced in the kneading or mixing device (**"pre-treatment" also named "initial"**), such as in an outside mixing Laboratory equipment; in the industrial scale, such a pre-treatment can be performed in an industrial device such as the **Lödige** mixer or any other industrial kneading or mixing equipment known to the art.

2 According to a less preferred embodiment, the said filler(s) blend is / are treated with the superplastifier(s) after having being introduced in the kneading or mixing device **("inside treatment").** In such a case, the said filler(s) blend is / are efficiently treated with the superplastifier(s) after having being introduced in the kneading or mixing device ("inside treatment") with the filler(s) blend and the efficient treating amount of the superfluidifier treating agent (s) being introduced in the kneading or mixing device either simultaneously or in a manner such that the filler(s) blend and the efficient amount of the superplastifer(s) treating agent(s) are introduced separately BUT at a very close location and time.

3 According to another embodiment, the said filler(s) blend is / are efficiently treated with the superplastifier(s) partially before being introduced in the kneading or mixing device ("partial pre-treatment") (such as in a well-known Lödige equipment) and partially after having been introduced in the pre-treated state in the said mixing or kneading device, the total of the two partial superplastifier(s) treatments being "efficient" in terms of treatment, surface coverage etc. as defined above ("mixed treatment"), with the second part or amount of the superplastifier(s) treating agent(s) being introduced in the kneading or mixing device either simultaneously with the pre-treated fillers blend or in a manner such that the pretreated filler(s) blend and the second part of the superplastifier(s) treating agent(s) are introduced separately BUT at a very close location and time .

When the filler(s) blend is / are to be treated at least partially inside the kneading or mixing device, ("mixed treatment"), the skilled man will understand that a corresponding amount or proportion of treating superplastifier(s) has to be added directly into the said kneading or mixing device or in admixture with the considered fillers blend just before the introduction in the kneading or mixing device, in the latter case, for example, on the weighting device ("balance") which is provided just before the powdered products are introduced into the kneading or mixing device. "Just before" will be easily understood as a place and time where the fillers blend and superplastifier(s) treating agents cannot or have no time to be mixed together, what would induce the beginning of the treatment. A good example is the balance where the two powders (fillers blend and superplastifier(s)) are placed together then almost immediately introduced, with no previous kneading or mixing, into the kneading or mixing device.

It is much preferred that the point and time of introduction of the said proportion of superplastifier(s) treating agent be as close as possible to the point and time of introduction of the partially treated filler(s), so as not to be diluted in the pre-existing products already present in the mixing or kneading device (such as sand, gravel, mix water, optionally routine additives, so that the treating agent be fully available for the filler(s).

This is also true in relation with the option "inside treatment".

In both options, actually, if the fillers blend is added at a location and at a time too far form the location and time of the superplastifier(s) treating agent, whatever the order of introduction, one could shift to a treatment which would be too late: this would actually make possible for the treating agent to be "consumed" by other ingredients before the filler is introduced, or, in the case of a fillers blend introduced first, lead to a late treatment ("post-addition" of the treating agent(s) a certain time after the fillers blend has been introduced; the results are far lower than with a pre-treatment, a mixed treatment or an inside treatment according to the invention).

Any post ajout has to be avoided.

The invention also covers an industrial option characterized in that at least a portion of the efficient amount of treating superplastifier(s), or the totality of the said efficient amount, is mixed with the fillers blend on the weighting device ("balance") leading to the kneading or mixing device. This can be regarded either as a simultaneous addition, or a "near-simultaneous" addition.

It is also possible to envision a process of the invention in which a portion of the fillers blend is efficiently "pretreated" and a second portion of the fillers blend is efficiently treated "inside" the kneading or mixing .

Some of the above options are evidently complicated and/or require additional equipments or modifications of the existing equipment. They are therefore far less preferred, the "pretreatment or initial mode being the most preferred.

The "best mode" to date to avoid those drawbacks is clearly to prepare a pre-treated fillers blend then to deliver it to the end user and to introduce it as such into the kneading or mixing device, most preferably after the mix water and sand and gravel, if any, have been introduced and allowed to be successively malaxed as is usual in this industry (the difference being that, in the present invention, the filler is actually a "the fillers blend" and it is TREATED with superplastifier (s) , while it is NOT in the prior art).

The invention also covers the:

- fillers blend of at least one carbonate-based filler with at least one aluminosiliceous material , per se, as well as the same treated with at least a superplastifier,

- as novel industrial products,

- to be delivered to an intermediate user or to the end user that way, optionally after any treatment allowing to ease the transportation.

It is known, in Laboratory trials, and due to the small volumes or loads involved, to sometimes first place some small amount of "fluidifiers" in the bottom of the laboratory mixing device: some of those fluidifiers may be superplastifiers, many are not. However, even when some small amounts of superplastifiers-"fluidifiers" are present, they cannot "treat" the fillers "efficiently" as in the invention, that is according to the definition given hereabove. They merely act as fluidifiers, so that they interact mainly with the other first constituents of the load, such as sand, gravel, mix water etc., which are malaxed together, alone, for a given period of time, so as to conveniently fluidize the particles or aggregates in the suspension; in this operation, they are "fixed" or "consumed" by the said aggregates particles that precisely need to be fluidized. If they were not, there would be no fluidification. Therefore, they are then no longer available for the fillers; even if, to be absolutely complete, we assume for a second that some (mandatorily very small amount) such fluidifier were quite partially and quite marginally available, it could only quite marginally interfere with the filler, that is in any case absolutely not with the "efficient" treatment effect generated by the superplastifiers deliberately added in the present invention .

In the industrial scale, one most generally uses NO fluidifiers, or in some exceptional cases in minute amounts, and in order to "fluidize" the mix: there again, the fluidifiers are "used" to fluidify sand, gravel, etc. and are not available for the fillers, and therefore can in no way "trigger" the "unblocking" of the system, the essential part of the invention.

As indicated hereabove, the said carbonate-based filler(s) are made of calcium carbonate(s) or blends thereof, that is mainly GCCs or PCCs or blends of GCCs or blends of PCCs or blends of GCCs and PCCs.

The invention also covers as new industrial PRODUCTS the said "fillers blend" of fillers and aluminosiliceous material, per se or after having been treated with at least a superplastifier.

The invention also resides in the said "CEMENT COMPOSITIONS" (in the wide sense defined above) comprising the said "fillers blend" of fillers and aluminosiliceous material, treated with at least a superplastifier, and their USE, and in the "CEMENT ELEMENTS or PRODUCTS" so obtained from the said compositions, and their USE in the "cement" industries.

By "CEMENT ELEMENTS or PRODUCTS" it is meant in this whole application each and any piece of building or construction (or any piece or product for any other industrial purpose known to the skilled man, including off-shore cementing, or oil wells cementing, using "cement" compositions) prepared from the said compositions, such as blocks, cement units or shapes etc.

The invention will be detailed herebelow.

## DETAILED DESCRIPTION OF THE INVENTION

In a detailed and most preferred ("best mode" as of today) embodiment, the said PROCESS for preparing the said "cement" compositions or systems is characterized by :

a) providing a powder of at least a dry calcium carbonate-based filler as defined above , hereafter "filler" ;

b) mixing or blending the said filler or fillers with at least an aluminosiliceous material as described above, this material replacing a part of the usual filler or fillers;

c) treating the resulting "fillers blend" with an efficient treating amount of at least one superplastifier, thus producing a "treated fillers blend",

d) introducing the said treated fillers blend into a kneading or mixing device already containing mix water or a composition of mix water possibly containing routine or "non-interfering" additives ("mix water composition") (hereafter for simplicity "mixing water")

e) optionally adding before or after the step c), preferably before, aggregates such as sand and/or gravel, and possibly other "non interfering" routine additives or adjuvants,

f) kneading or mixing the said load during an efficient period of time,

g) recovering the said "cement" composition.

Mix water can be optionally introduced at another point of the process, under a much less preferred option depending on the requisite of the end user.

By "not interfering", it is meant not interfering or not noticeably with the said considered treatment or inventive process.

By "efficient period of time", it is meant a total period of time leading to an homogeneous mixture or blend, in the order of 2 - 15 min, preferably, for the "standard" mixtures or blends, 30 - 60 s. This will be detailed hereafter.

An example of end-user application is as follows: if the end-user targets medium or "standard" properties for its final cement composition, for example with a final mixing within his facilities in a fixed installation etc..., he will use compositions which are correspondingly simple that is not specifically complex or sensitive in terms of routine additives, superplastifier, fluidifier, filler etc...; therefore, the end user will have to mix for a relatively short time such as the above 35 - 65 s.

If to the contrary the end-user targets high-level or very HP properties, he will use correspondingly more complex compositions and more sensitive components, for example a more sensitive filler or superplastifier, or sensitive routine additives aimed at reaching a specific property, etc.... and usually he will use less or far less mixing water: therefore he will need to mix for a much longer time such as the above 1 - 3 to 10 - 15 min.

As mentioned above, a plastifier can be used as is routinely done, as well as the "bottom tank" fluidifier also routinely used. That is, a fluidifier such as CHRYSO Premia 196 usually placed in the kneading tank or vessel before adding the other ingredients of the "cement".

The optimum is a treatment in the presence of between 3 and 4 g of fluidifier, such as 3.4 - 3.7 g, preferably 3.5 g / dry weight of the total cement composition.

The main essential criteria for the final product must be homogeneous and "fluid" what can be easily checked by any skilled man by performing some routine cone tests.

The above working principals are well known to the skilled man and are for completeness only. The above values and examples are to provide guidelines only, which the skilled man will be able to easily use in order to meet the essential "main criteria".

One will understand that it is impossible to provide examples or data for any type of ultimate composition or ingredient, since the interactions are complex, so are the kinetics etc... but the skilled man knows about those parameters.

By "just after" it is meant that the treating agent can be introduced before of after the un-treated filler(s), but in the second case it must be introduced rapidly after the filler(s) , say, in a matter of some seconds to 10 s or so, in order for the filler to remain fully available for the treating agents without any disturbance due to the kneading or mixing with sand, gravel etc.

It is usually most preferred to first introduce the aggregates such as sand and gravel into the kneading or mixing device, and mix them optionally with a small amount of water and/or of fluidifier (see above), before performing the other steps.

As treatment agent, is used at least one superplastifier (and possibly at least one superplasticizer with possibly some inert amount of plasticizer).

According to the above definition of the treating agent, the so called treating agents for the fillers consist of / or comprise superplastifier(s), or comprise at least one superplastifier (and optionally at least one plastifier in order to reduce the overall costs), and preferably consist of at least one superplastifier and optionally at least one efficiently cost-reducing amount of plastifier, and most preferably one superplastifier and optionally one efficiently cost-reducing amount of a plasticizer.

Superplastifiers are well-known agents and are to the best selected among the following products or families and their blends:

Polycarboxylates, polycarboxylate ethers, or much less preferred products manufactured from sulfonated naphthalene condensate or sulfonated melamine formaldehyde. The skilled man knows these products, which are additionally disclosed in the prior art as cited above.

One will use preferably sodium salts of polyether carboxylates which are disclosed, as well as their preparation, in US 5,739,212.

In this invention, the best mode treating agents (product A and product B defined in the above EPA) appear to be, in the superplastifiers families, of the polycarboxylate ether formulae.

Superplastifier(s) and especially Products A and B are disclosed in WO 2004 / 041882.

To be noted, the products codes A to K in Table A are FILLERS to be characterized, NOT to create a confusion with the preferred treating agent(s) A and B above which are (superplastifiers(s)).

By "efficient period of time" it is meant here a period of time of about 35 - 65 s for the standard compositions, and from 1 - 3 to 10 - 15 min. for the more "technical" that is more complex and/or more sensitive compositions, as is known from the skilled man.

For a composition comprising a "low" carbonate-based filler, an example can be a kneading time of 10 - 15 - 20 s for the gravel and sand (dry kneading or mixing is preferred), then of 10 s for the kneading or mixing of the hydraulic binder and untreated filler, then 10 - 15 s for the kneading or mixing with the treatment agent(s) and mix water, then 5 - 15 s for the final kneading or mixing with the final "routine additives".

The main and essential criteria for the said "period of mixing" is that the final product must be homogeneous and fluid at the cone test and the treating agent(s) be not absorbed or adsorbed onto the sand or gravel, or the the less possible extent.

By "efficient amount" of plasticizer (when present with the superplastifier) it is meant in this application an amount or proportion of plastifier which is able to reduce the cost of the treatment without interfering negatively with the system and namely the filler(s) behaviour, namely in terms of surface activity and reactivity) ; the same criteria applies to the "inert additives".

By "comprising" we mean here that the said treatment agents consist essentially or entirely of superplastifier (s) as defined, and may contain as explained a cost-reducing efficient amount of at least one plastifier, and may also contain inert additives useful for the intended final application, such as anti foam agents, retarders, accelerators etc. absolutely known to the skilled man.

Usual additives of inert nature can be added at injection points known to the skilled man, as said earlier.

The mixing or kneading device can be operated in a batch mode , a semi-continuous mode, or a continuous mode, the adaptations being within the easy reach of an average skilled man.

**Dosage of superplastifier(s) used for the pre-treatment and treatment of the filler(s)**

At the end-user location, the dosage in superplastifier(s) is ranging from 0.03 or 0.05 to 0.1 % to 2 - 3% dry weight of cement, or 0.3 to 2 - 3 kg for 100 kg of cement, preferably 0.8 to 1.2 kg / 100 kg of cement, on a DRY / DRY basis.

In laboratory conditions, the same proportion ranges from 0.05 to 0.1 % by weight of the carbonate ( DRY ) that is 0.1 to 0.3 kg / 100 kg of cement, on a DRY / DRY basis.

In laboratory conditions, for establishing the Table A, one used from 0.8 to 1.1 kg / 100 kg cement, on a DRY / DRY basis.

At the end user location, the ratio superplastifier(s) / plasticizer(s) can be from 100/0 to 95/5 - 90 / 10, preferably no less than 85 / 15 on a weight dry basis.

The invention also resides in the said CEMENT (in the broad sense given above that is cement, cementitious compositions, mortars, concretes) COMPOSITIONS (OR SYSTEMS) :

- per se, since they are distinguishable from the prior art similar compositions by their physical structure and their properties,

- or as prepared by the above process of the invention, and in the USE of those cement systems or compositions for making concrete elements, and ultimately in the CEMENT ELEMENTS such as blocks for building and construction etc.

- per se, since they are distinguishable for the same reasons as the compositions,

- and as prepared by using the said compositions.
  as well as in the

- calcium carbonate-based filler(s) blended with an aluminosiliceous material according to the invention, per se,

- or as pre-treated by the superplastifier(s) pretreatment process of the invention.

Another objective is evidently to meet Client's requirements which are that the "galette" or "cone" or "cone spread" be above 350 mm in diameter, most preferably 400 mm, or still better, above 420 mm, at a cost-effective dosage.

The main purpose of this invention is to reach high values for the mechanical strength especially at 7 days, and still more at 28 and 90 days, so that in certain cases, a diameter of only 300 mm can be tolerated if the RC 28d and 90d are quite satisfactory.

This criteria can be easily and quickly appreciated by a skilled man by performing the cone and plate test, and by visual inspection showing a "fluid" cement composition (that is not dry, not plastic, and featuring a good flow rate). The skilled man how to appreciate those objective or subjective criterias on the basis of the general common knowledge.

This test allows therefore to discriminate the fillers and select the best-performing filler and even the best performing superplastifier(s), in view of the final properties required by the end user.

It is necessary to keep in mind that, for a concrete composition or system to be acceptable as HP composition, or upgraded from low or medium quality to HP quality, **TWO** features MUST be met **simultaneously:**

- the diameter of the "galette" or cone must be above about 350, or better above 400, or still better above 420 mm, AND

- the "galette" or cone must NOT be sticky or thick in consistency.

In addition, the present invention ensures very high values for Rc7d, and especially Rc28d and Rc90d.

This is another measurement of the very tough challenge which this invention wishes to overcome, and of the very high technical and scientific input brought by the invention to the current state of the art.

As can be seen from the attached **Table A,** the "poor" fillers can NOT be upgraded since they never meet BOTH features.

This is also true for some "medium" fillers such as product D, B , G , I and K which may show a good fluidity for example at a dosage of 4 g BUT have a bad aspect or handling behaviour.

With the help of the **Table A** and of the above and below comments, the skilled man will be able to discriminate the fillers which CAN be upgraded by the invention, and those (regarded as "low" as per the test of the Table A) which can NOT.

To achieve these objectives, the skilled man bears in mind first that a certain water / cement ratio is directly linked to the workability of the composition and that it is also imperative to develop high performance qualities in the end product, such as high performance or "technical" level of setting properties, drying properties, mechanical strength, namely compressive strength etc.

Two superplastifiers products are providing the best results. They are the "best mode" as of the filing date (products **A** and **B** of the polycarboxylate ether family) as mentioned above.

It is very surprising to notice that when using the invention, proportions of superplastifier(s) treating agent(s) for the $CaCO_3$ filler(s) as low as 0.03 or 0.05 to 0.1 - 0.2% are sufficient (/dry weight of the cement). It is entirely surprising to notice that such minuscule amounts of treating agents are capable of ensuring high Rc28d and 90d and an upgrade to HP quality for even medium to poor and "difficult" fillers, see in particular marbles and certain specific knowingly "difficult" carbonates such as from Ecouché (Betocarb EC™ d50 = about 7 $\mu$m).

Some usual additives may be routinely added such as air entrainment agents, setting retarders or accelerators etc. at a place which is known from the skilled man, for example with the water or after the superplastifiers are added.

As to the "powders" that is the cement and the filler, the cement can be added first, then the filler, or the reverse, or they can be introduced together as a premix.

It is however preferred to introduce the cement and the treated filler together as a premix, so as to better ensure that both powders will be homogeneously mixed with and wet with the water.

The above are **batch** modes.

One can also think of **continuous** modes such as performing the addition in one of the above orders, for example in a kneading or mixing device equipped with an endless screw (with additions at various points along the length of the equipment), possibly with pre-mixes being added at some point(s), or as another example in a series of successive kneading or mixing devices, also with the possibility of adding premix(es) in one of the devices. It will be obvious to the skilled man that especially the latter option (several kneading or mixing devices) has numerous drawbacks, if only the necessary space and investment.

Batch modes are preferred and will be referred to here-below.

Routine tests can help the skilled man to select the most appropriate, in view of the available equipment, of the end user practice, and with the help of the following Tables and Figures which are attached to this application.

**Dosage of the alumino-siliceous material / carbonate-based filler(s)**

The dosage of the SiO2/Al2O3 aluminosiliceous material can represent 8.5 to 100 %, preferably 8.5 to 40, or 10 to 70 - 85 % / dry weight of carbonate-based filler(s), preferably 30 - 35 - 40 % / dry weight of carbonate-based filler(s) .

As will be seen below, an optimum has been surprisingly discovered around 35% alumino-siliceous material / around 65% (total being 100%) carbonate-based filler(s) /dry weight of carbonate-based filler(s); this optimum allows to reduce the needed amount of superplastifier(s).

In the following examples, except if otherwise stated, the cement brand is the standardized cement 42,5 R Gaurain (CEM) having a water demand of 24.2%, and the sand is Standardized sand under Standard EN 196 - 1 (SAN).

## EXAMPLES

### Example 1

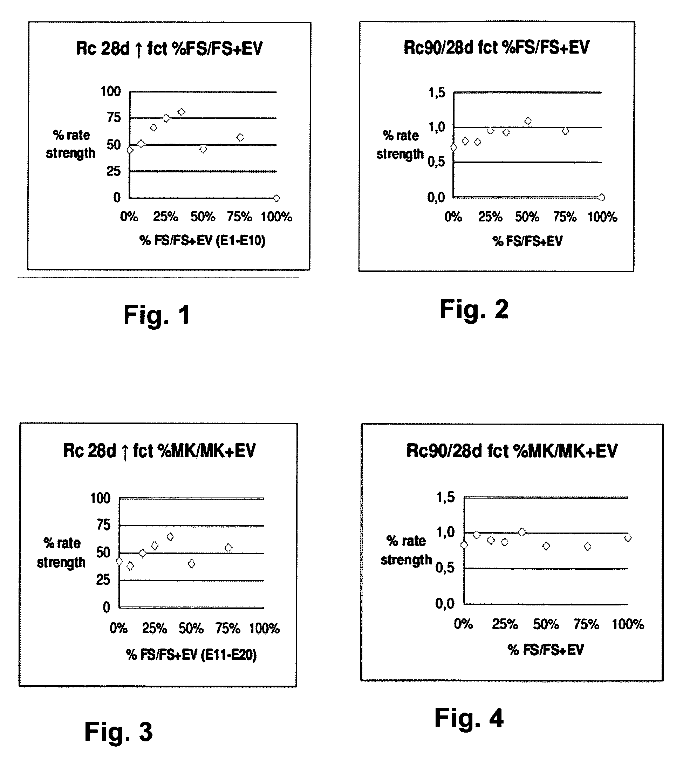

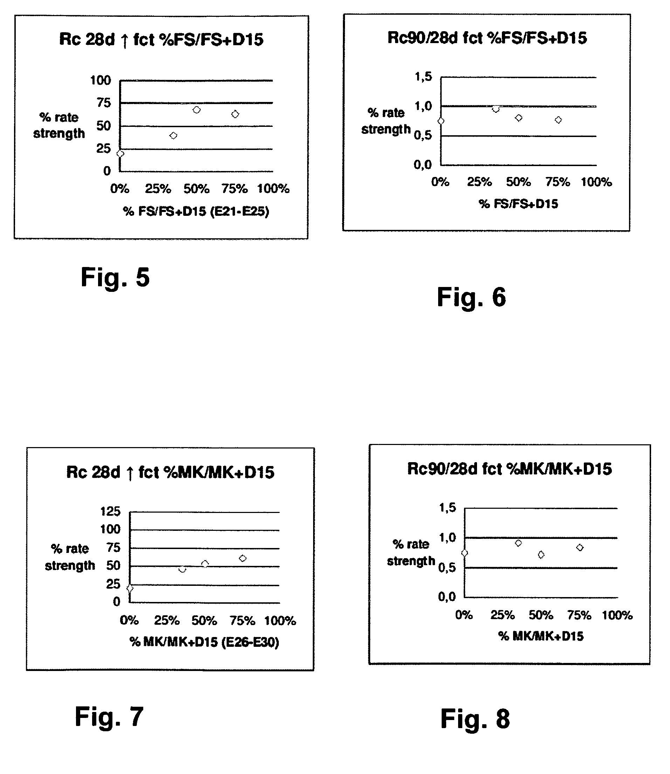

Refers to Table B and corresponding Figures 1 to 8

| Test | | Ref. | Cement | Sand | Water | Filler | A | | SiO2/Al2O3 | | Flow table | Rc 28d | Rc 90d | Rc90/28 |
|------|---|------|--------|------|-------|--------|---|---|------------|---|------------|--------|--------|---------|
| | | | g | g | g | g | g | % | g | % | mm | MPa | | |
| Specimen | E1 | ST | 472 | 1676 | 260 | 0 | 0,0 | 0,0 | 0 | 0% | 200 | | | |
| EV | E2 | MO | 472 | 1645 | 223 | 142 | 2,2 | 0,5 | 0 | 0% | 206 | 45 | 32 | 0,7 |
| EV+FS | E3 | M1 | 472 | 1645 | 223 | 131 | 2,4 | 0,5 | 11 | 8% | 204 | 51 | 41 | 0,8 |
| EV+FS | E4 | M2 | 472 | 1645 | 223 | 119 | 2,9 | 0,6 | 23 | 16% | 208 | 66 | 52 | 0,8 |
| EV+FS | E5 | M3 | 472 | 1645 | 223 | 107 | 3,3 | 0,7 | 35 | 25% | 206 | 75 | 71 | 0,9 |
| EV+FS | E6 | M4 | 472 | 1645 | 223 | 92 | 3,8 | 0,8 | 50 | 35% | 200 | 81 | 75 | 0,9 |
| EV+FS | E7 | M5 | 472 | 1645 | 223 | 0 | 0,0 | 0,0 | 142 | 100% | 0 | 0 | 0 | 0,0 |
| Specimen | E8 | ST | 472 | 1676 | 260 | 0 | 0,0 | 0,0 | 0 | 0% | 205 | | | 0,0 |
| EV+FS | E9 | M6 | 472 | 1645 | 223 | 71 | 3,0 | 0,6 | 71 | 50% | 191 | 46 | 50 | 1,1 |
| EV+FS | E10 | M7 | 472 | 1645 | 223 | 35 | 4,0 | 0,8 | 107 | 75% | 180 | 57 | 54 | 0,9 |
| Specimen | E11 | ST | 472 | 1676 | 260 | 0 | 0,0 | 0,0 | 0 | 0% | 203 | | | |
| EV | E12 | MO | 472 | 1645 | 223 | 142 | 2,2 | 0,5 | 0 | 0% | 209 | 42 | 35 | 0,8 |
| EV+MK | E13 | M1 | 472 | 1645 | 223 | 131 | 2,6 | 0,6 | 11 | 8% | 200 | 38 | 37 | 1,0 |
| EV+MK | E14 | M2 | 472 | 1645 | 223 | 119 | 3,2 | 0,7 | 23 | 16% | 208 | 50 | 45 | 0,9 |
| EV+MK | E15 | M3 | 472 | 1645 | 223 | 107 | 3,6 | 0,8 | 35 | 25% | 200 | 57 | 50 | 0,9 |
| EV+MK | E16 | M4 | 472 | 1645 | 223 | 92 | 4,1 | 0,9 | 50 | 35% | 201 | 65 | 66 | 1,0 |
| EV+MK | E17 | M5 | 472 | 1645 | 223 | 0 | 8,3 | 1,8 | 142 | 100% | 203 | 111 | 104 | 0,9 |
| Specimen | E18 | ST | 472 | 1676 | 260 | 0 | 0,0 | 0,0 | 0 | 0% | 205 | | | 0,0 |
| EV+MK | E19 | M6 | 472 | 1645 | 223 | 71 | 3,0 | 0,6 | 71 | 50% | 182 | 40 | 33 | 0,8 |
| EV+MK | E20 | M7 | 472 | 1645 | 223 | 35 | 4,5 | 1,0 | 107 | 75% | 189 | 55 | 45 | 0,8 |
| Specimen | E21 | ST | 472 | 1676 | 260 | 0 | 0,0 | 0,0 | 0 | 0% | 205 | | | |
| Betocarb SL | E22 | MO | 472 | 1645 | 223 | 142 | 2,5 | 0,5 | 0 | 0% | 197 | 20 | 15 | 0,8 |
| Betocarb SL+FS | E23 | M4 | 472 | 1645 | 223 | 92 | 3,0 | 0,6 | 50 | 35% | 199 | 40 | 38 | 0,9 |
| Betocarb SL+FS | E24 | M6 | 472 | 1645 | 223 | 71 | 4,0 | 0,8 | 71 | 50% | 208 | 68 | 55 | 0,8 |
| Betocarb SL+FS | E25 | M7 | 472 | 1645 | 223 | 35 | 5,0 | 1,1 | 107 | 75% | 200 | 63 | 49 | 0,8 |
| Specimen | E26 | ST | 472 | 1676 | 260 | 0 | 0,0 | 0,0 | 0 | 0% | 205 | | | |
| Betocarb SL | E27 | MO | 472 | 1645 | 223 | 142 | 2,5 | 0,5 | 0 | 0% | 197 | 20 | 15 | 0,8 |
| Betocarb SL+MK | E28 | M4 | 472 | 1645 | 223 | 92 | 3,8 | 0,8 | 50 | 35% | 197 | 46 | 42 | 0,9 |
| Betocarb SL+MK | E29 | M6 | 472 | 1645 | 223 | 71 | 5,0 | 1,1 | 71 | 50% | 190 | 54 | 39 | 0,7 |
| Betocarb SL+MK | E30 | M7 | 472 | 1645 | 223 | 35 | 6,0 | 1,3 | 107 | 75% | 192 | 62 | 52 | 0,8 |

# TABLE B

In this test, a calcium carbonate filler respectively selected among

EV (violet label or etiquette violette ™) (ultrafine carbonate filler from Omey, France) d50 = 2.4 - 2.5 microns Blaine > 1000 m2/kg and BET = 2.3 m2/g or

Betocarb SL ™ coarse carbonate filler from Salses, France d50=11-12 microns Blaine surface = 320-365 m2/g

Is pre-mixed with an aluminosiliceous material, either:

SF (or FS) silica fume (ultrafine filler) d50 = 1.2 micron Blaine > 1500 m2/kg and BET = 16 m2/g or

MK (metakaolin) (ultrafine filler) d50 = 3 microns BET=3.8 m2/g.

"Specimen" is a test without treatment with an aluminosiliceous material and without a treatment with any superplastifier.

EV (test E2) or Betocarb SL (test E22) (etc...) are blank tests with no aluminosiliceous material but with a treatment with Product B superplastifier.

EV + FS means that EV has been mixed in the indicated proportion (8%, 16 % etc....) with FS (column Si02/Al203) (the total remaining 142 g example E3 131g+11g) AND the mix (fillers blend) has been treated by the fluidifier in the % indicated.

Compressive strength (RC or Rc) at 28 days and 90 days are indicated, as well as the ratio of RC 90d / RC 28d.

Results are represented as schemes on Figs. 1 to 8 which are self-explaining.

**Example 2**

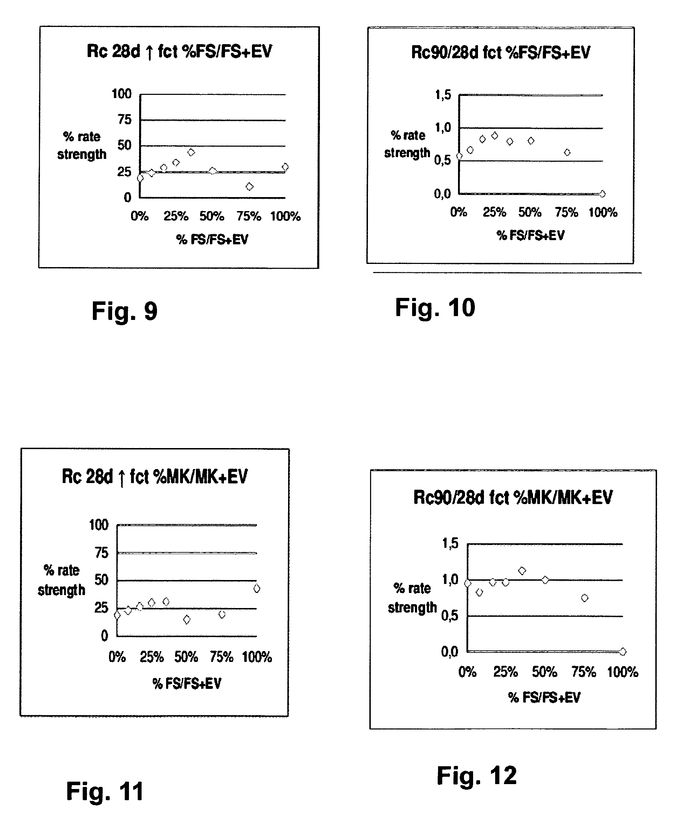

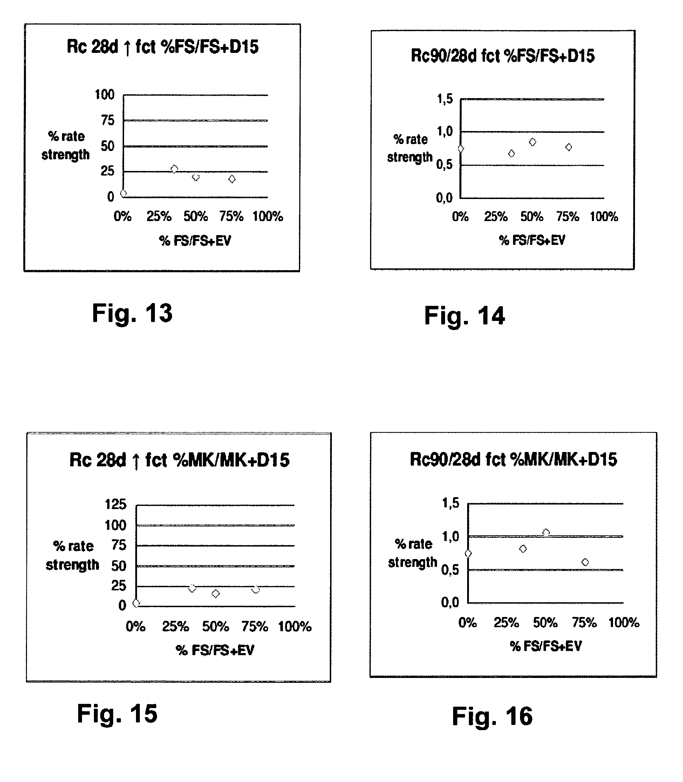

**Refers to Table C and Fig. 9 - 16**

| Test | Ref. | Cement | Sand | Water | Filler | A | | SiO2/Al2O3 | | Flow table | Rc 28d | Rc 90d | Rc90/28 |
|------|------|--------|------|-------|--------|---|---|-----------|---|-----------|--------|--------|---------|
| | | g | g | g | g | g | % | g | % | mm | MPa | | |
| Specimen | ST | 472 | 1676 | 260 | 0 | 0,0 | 0,0 | 0 | 0% | 212 | | | |
| EV | MO | 472 | 1534 | 250 | 142 | 0,0 | 0,0 | 0 | 0% | 208 | 19 | 11 | 0,6 |
| EV+SF | M1 | 472 | 1534 | 258 | 131 | 0,0 | 0,0 | 11 | 8% | 206 | 24 | 16 | 0,7 |
| EV+SF | M2 | 472 | 1534 | 260 | 119 | 0,0 | 0,0 | 23 | 16% | 206 | 29 | 24 | 0,8 |
| EV+SF | M3 | 472 | 1534 | 273 | 107 | 0,0 | 0,0 | 35 | 25% | 200 | 34 | 30 | 0,9 |
| EV+SF | M4 | 472 | 1534 | 273 | 92 | 0,0 | 0,0 | 50 | 35% | 200 | 44 | 35 | 0,8 |
| EV+SF | M5 | 472 | 1534 | 341 | 0 | 0,0 | 0,0 | 142 | 100% | 0 | 30 | 26 | 0,0 |
| Specimen | ST | 472 | 1676 | 260 | 0 | 0,0 | 0,0 | 0 | 0% | 205 | | | 0,0 |
| EV+SF | M6 | 472 | 1534 | 283 | 71 | 0,0 | 0,0 | 71 | 50% | 185 | 26 | 21 | 0,8 |
| EV+SF | M7 | 472 | 1534 | 303 | 35 | 0,0 | 0,0 | 107 | 75% | 181 | 11 | 7 | 0,6 |
| Specimen | ST | 472 | 1676 | 260 | 0 | 0,0 | 0,0 | 0 | 0% | 203 | | | |
| EV | MO | 472 | 1534 | 250 | 142 | 0,0 | 0,0 | 0 | 0% | 203 | 19 | 18 | 0,9 |
| EV+MK | M1 | 472 | 1534 | 255 | 131 | 0,0 | 0,0 | 11 | 8% | 205 | 23 | 19 | 0,8 |
| EV+MK | M2 | 472 | 1534 | 258 | 119 | 0,0 | 0,0 | 23 | 16% | 201 | 27 | 26 | 1,0 |
| EV+MK | M3 | 472 | 1534 | 266 | 107 | 0,0 | 0,0 | 35 | 25% | 200 | 30 | 29 | 1,0 |
| EV+MK | M4 | 472 | 1534 | 275 | 92 | 0,0 | 0,0 | 50 | 35% | 204 | 31 | 35 | 1,1 |
| EV+MK | M5 | 472 | 1534 | 293 | 0 | 0,0 | 0,0 | 142 | 100% | 193 | 43 | 25 | 0,0 |
| Specimen | ST | 472 | 1676 | 260 | 0 | 0,0 | 0,0 | 0 | 0% | 205 | | | 0,0 |
| EV+MK | M6 | 472 | 1534 | 283 | 71 | 0,0 | 0,0 | 71 | 50% | 208 | 15 | 15 | 1,0 |
| EV+MK | M7 | 472 | 1534 | 303 | 35 | 0,0 | 0,0 | 107 | 75% | 206 | 20 | 15 | 0,8 |
| Specimen | ST | 472 | 1676 | 260 | 0 | 0,0 | 0,0 | 0 | 0% | 205 | | | |
| Betocarb SL | MO | 472 | 1534 | 253 | 142 | 0,0 | 0,0 | 0 | 0% | 195 | 4 | 3 | 0,8 |
| Betocarb SL+FS | M4 | 472 | 1534 | 265 | 92 | 0,0 | 0,0 | 50 | 35% | 183 | 28 | 19 | 0,7 |
| Betocarb SL+FS | M6 | 472 | 1534 | 280 | 71 | 0,0 | 0,0 | 71 | 50% | 180 | 20 | 17 | 0,9 |
| Betocarb SL+FS | M7 | 472 | 1534 | 303 | 35 | 0,0 | 0,0 | 107 | 75% | 180 | 18 | 14 | 0,8 |
| Specimen | ST | 472 | 1676 | 260 | 0 | 0,0 | 0,0 | 0 | 0% | 205 | | | |
| Betocarb SL | MO | 472 | 1534 | 253 | 142 | 0,0 | 0,0 | 0 | 0% | 195 | 4 | 3 | 0,8 |
| Betocarb SL+MK | M4 | 472 | 1534 | 265 | 92 | 0,0 | 0,0 | 50 | 35% | 189 | 22 | 18 | 0,8 |
| Betocarb SL+MK | M6 | 472 | 1534 | 280 | 71 | 0,0 | 0,0 | 71 | 50% | 198 | 16 | 17 | 1,1 |
| Betocarb SL+MK | M7 | 472 | 1534 | 303 | 35 | 0,0 | 0,0 | 107 | 75% | 213 | 21 | 13 | 0,6 |

## TABLE C

This example is identical to Example 1 with the difference that the blend of fillers has NOT been treated with superplastifier A (column A = 0%). It can be seen that the RC are lower in this example 2 as compared to example 1 what shows the synergy between the preblend (or "fillers blend") and the treatment of that fillers blend with a superplastifier.

One can draw a surprising conclusion from table C which is that, without adding any superplastifier, and by varying from 0% to 100 % the proportion of aluminosiliceous material / dry weight of filler CaCO3, there exists :

- for the case where the filler is EV and the aluminosiliceous is Silica Fume Sifraco C800 (d50 = 2.4 $\mu$m , BET = 2.7 m$^2$/g)

- an optimum of Rc at 28d (Rc28d= 44) and Rc at 90d (Rc90d = 35)

- for an optimum of 35% UF (here silica fume) / 65 % CaCO3 filler (here EV), by dry weight.

- This is also valid for 65% Betocarb SL / 35% SF (Rc28d = maximum 28 and Rc90d = maximum 19).

- To the contrary, with metakaolin, there does not seem to appear a clear optimum, see for example the Rc28d of EV/MK rising from 19 to 43 *while however* Rc90d shows a maximum value *also* at 35% MK (Rc90d = 35 then drops to 25 at 100% MK)

Therefore, the present tests have detected an optimum ratio of about 35% aluminosiliceous material/about 65% CaCO3 filler (by dry weight) .

The invention therefore also covers the specific new industrial product comprising or consisting of:

- about 35% aluminosiliceous material/about 65% CaCO3 filler (by dry weight)

- namely 35% aluminosiliceous material/65% CaCO3 filler (by dry weight)

- namely 35% Silica fume / 65% UF CaCO3 filler

- namely 35% Silica fume / 65% EV CaCO3 filler

**Example 3**

**Refers to tables D to M**

Two series of tests have been conducted.

<u>Module 1 :</u> **one uses a fixed formulation for a mortar, which is given in Table D, with adjustment only on the dispersing agent proportion. The purpose of the "adjustment" is to reach a cone "mortar diameter" of between 300 and 400 mm with a somewhat plastic mortar.**

**TABLE D**

| | Standard | SiO2/Al2O3 = 0% CaCO3 = 100% | SiO2/Al2O3 = 35% CaCO3=65% | SO2/Al2O3=50% CaCO3=50% | SiO2/Al2O3 = 75% CaCO3=25% |
|---|---|---|---|---|---|
| Reference | ST | M0 | M4 | M6 | M7 |
| % Tested ultrafine SiO2 Al2O3 | 0 | 0 | 35 | 50 | 75 |
| % Violet Label or Betocarb SL | 0 | 100 | 65 | 50 | 25 |
| Mass of tested SiO2/Al2O3 | 0 | 0,0 | 49,7 | 71,0 | 106,5 |
| Mass of Violet Label or Betocarb SL | 0 | 142,0 | 92,3 | 71,0 | 35,5 |
| Dispersing agent quantity | 0 | adjusted | adjusted | adjusted | adjusted |
| Total quantity (SiO2/Al2O3+CaCO3) | 0 | 142,0 | 142,0 | 142,0 | 142,0 |
| Cement: CEM 142,5R de Gaurain | 472 | 472 | 472 | 472 | 472 |
| Sand | 1676 | 1645 | 1645 | 1645 | 1645 |
| Water | 260 | 223 | 223 | 223 | 223 |
| % of dispersing agent dry / dry | 0 | calculated | calculated | calculated | calculated |
| | 0 | 142 | 142 | 142 | 142 |
| % (SiO2-Al2O3) / Cement | 0 | 0,00 | 0,11 | 0,15 | 0,23 |
| Water / Cement ratio | 0.55 | 0.47 | 0,47 | 0,47 | 0,47 |
| Mortar diameter (mm) | Must be between 300 and 400 mm | | | | |

| VIOLET LABEL + SILICA FUME | Standard | SiO2/Al2O3 = 50% CaCO3 = 50% | SiO2/Al2O3 = 75% CaCO3 = 25% |
|---|---|---|---|
| Reference | ST | M6 | M7 |
| % Tested ultrafine SiO2 Al2O3 | 0 | 50 | 75 |
| % Violet Label | 0 | 50 | 25 |
| Mass of tested SiO2/Al2O3 | 0 | 71,0 | 106,5 |
| Mass of Violet Label | 0 | 71,0 | 35,5 |
| Dispersing agent quantity (g) | 0 | 3 | 4 |
| Total quantity (SiO2/Al2O3 + CaCO3) (g) | 0 | 142,0 | 142,0 |
| Cement : CEM I 42,5R de Gaurain (g) | 472 | 472 | 472 |
| Sand (g) | 1676 | 1645 | 1645 |
| Water (g) | 260 | 223 | 223 |
| % of dispersing agent dry / dry | 0 | 0,74 | 0,98 |
| % (SiO2-Al2O3) / Cement | 0 | 0,15 | 0,23 |
| Water / Cement ratio | 0,55 | 0,47 | 0,47 |
| Mortar diameter (mm) | 205 | 191 | 180 |
| Weight (g) | 1717 | 1697 | 1685 |
| Weight H2O (g) | 973 | 941 | 928 |
| Formulation volume | 1,04 | 1,11 | 1,07 |
| 28d resistances | 74,7 | 109,3 | 117,4 |
| 28d gain | ✕ | 46 | 57 |
| 90d resistances | 85,8 | 128,3 | 132,1 |
| 90d gain | ✕ | 50 | 54 |

## TABLE E

| VIOLET LABEL + METAKAOLIN | Standard | SiO2/Al2O3 = 50% CaCO3 = 50% | SiO2/Al2O3 = 75% CaCO3 = 25% |
|---|---|---|---|
| Reference | ST | M6 | M7 |
| % Tested ultrafine SiO2 Al2O3 | 0 | 50 | 75 |
| % Violet Label | 0 | 50 | 25 |
| Mass of tested SiO2/Al2O3 | 0 | 71,0 | 106,5 |
| Mass of Violet Label or Betocarb SL | 0 | 71,0 | 35,5 |
| Dispersing agent quantity (g) | 0 | 3 | 4,5 |
| Total quantity (SiO2/Al2O3 + CaCO3) (g) | 0 | 142,0 | 142,0 |
| Cement : CEM I 42,5R de Gaurain (g) | 472 | 472 | 472 |
| Sand (g) | 1676 | 1645 | 1645 |
| Water (g) | 260 | 223 | 223 |
| % of dispersing agent dry / dry | 0 | 0,74 | 1,11 |
| % (SiO2-Al2O3) / Cement | 0 | 0,15 | 0,23 |
| Water / Cement ratio | 0,55 | 0,47 | 0,47 |
| Mortar diameter (mm) | 205 | 182 | 189 |
| Weight (g) | 1717 | 1708 | 1712 |
| Weight H2O (g) | 973 | 956 | 956 |
| Formulation volume | 1,04 | 1,09 | 1,05 |
| 28d resistances | 74,7 | 104,7 | 116,1 |
| 28d gain | | 40 | 55 |
| 90d resistances | 85,8 | 114,2 | 124,3 |
| 90d gain | | 33 | 45 |

## TABLE F

| BETOCARB SL + SILICA FUME | Standard | SiO2/Al2O3 = 0%<br>CaCO3 = 100% | SiO2/Al2O3 = 35%<br>CaCO3 = 65% | SiO2/Al2O3 = 50%<br>CaCO3 = 50% | SiO2/Al2O3 = 75%<br>CaCO3 = 25% |
|---|---|---|---|---|---|
| Reference | ST | M0 | M4 | M6 | M7 |
| % Tested ultrafine SiO2 Al2O3 | 0 | 0 | 35 | 50 | 75 |
| % Betocarb SL | 0 | 100 | 65 | 50 | 25 |
| Mass of tested SiO2/Al2O3 | 0 | 0,0 | 49,7 | 71,0 | 106,5 |
| Mass of Violet Label or Betocarb SL | 0 | 142,0 | 92,3 | 71,0 | 35,5 |
| Dispersing agent quantity (g) | 0 | 2,5 | 3 | 4 | 5 |
| Total quantity (SiO2/Al2O3 + CaCO3) (g) | 0 | 142,0 | 142,0 | 142,0 | 142,0 |
| Cement : CEM I 42,5R de Gaurain (g) | 472 | 472 | 472 | 472 | 472 |
| Sand (g) | 1676 | 1645 | 1645 | 1645 | 1645 |
| Water (g) | 260 | 223 | 223 | 223 | 223 |
| % of dispersing agent dry / dry | 0 | 0,61 | 0,74 | 0,98 | 1,23 |
| % (SiO2-Al2O3) / Cement | 0 | 0,00 | 0,11 | 0,15 | 0,23 |
| Water / Cement ratio | 0,55 | 0,47 | 0,47 | 0,47 | 0,47 |
| Mortar diameter (mm) | 205 | 197 | 199 | 202 | 195 |
| Weight (g) | 1717 | 1775 | 1690 | 1715 | 1692 |
| Weight H2O (g) | 973 | 1023 | 936 | 961 | 938 |
| Formulation volume | 1,04 | 1,05 | 1,11 | 1,09 | 1,06 |
| 28d resistances | 74,7 | 89,9 | 104,3 | 125,3 | 122 |
| 28d gain | ✕ | 20 | 40 | 68 | 63 |
| 90d resistances | 85,8 | 98,8 | 118,4 | 132,9 | 128,3 |
| 90d gain | ✕ | 15 | 38 | 55 | 49 |

# TABLE G

| BETOCARB SL + METAKAOLIN | Standard | SiO2/Al2O3 = 0% CaCO3 = 100% | SiO2/Al2O3 = 35% CaCO3 = 65% | SiO2/Al2O3 = 50% CaCO3 = 50% | SiO2/Al2O3 = 75% CaCO3 = 25% |
|---|---|---|---|---|---|
| Reference | ST | M0 | M4 | M6 | M7 |
| % Tested ultrafine SiO2 Al2O3 | 0 | 0 | 35 | 50 | 75 |
| % Betocarb SL | 0 | 100 | 65 | 50 | 25 |
| Mass of tested SiO2/Al2O3 | 0 | 0,0 | 49,7 | 71,0 | 106,5 |
| Mass of Violet Label or Betocarb SL | 0 | 142,0 | 92,3 | 71,0 | 35,5 |
| Dispersing agent quantity (g) | 0 | 2,5 | 3,8 | 5 | 6 |
| Total quantity (SiO2/Al2O3 + CaCO3) (g) | 0 | 142,0 | 142,0 | 142,0 | 142,0 |
| Cement : CEM I 42,5R de Gaurain (g) | 472 | 472 | 472 | 472 | 472 |
| Sand (g) | 1676 | 1645 | 1645 | 1645 | 1645 |
| Water (g) | 260 | 223 | 223 | 223 | 223 |
| % of dispersing agent dry / dry | 0 | 0,61 | 1,08 | 1,23 | 1,48 |
| % (SiO2-Al2O3) / Cement | 0 | 0,00 | 0,11 | 0,15 | 0,23 |
| Water / Cement ratio | 0,55 | 0,47 | 0,47 | 0,47 | 0,47 |
| Mortar diameter (mm) | 205 | 197 | 197 | 190 | 192 |
| Weight (g) | 1717 | 1775 | 1730 | 1769 | 1766 |
| Weight H2O (g) | 973 | 1023 | 979 | 1021 | 1013 |
| Formulation volume | 1,04 | 1,05 | 1,08 | 1,05 | 1,01 |
| 28d resistances | 74,7 | 89,9 | 109,3 | 114,7 | 121 |
| 28d gain | ✕ | 20 | 46 | 54 | 62 |
| 90d resistances | 85,8 | 98,8 | 121,8 | 119,7 | 130,4 |
| 90d gain | ✕ | 15 | 42 | 39 | 52 |

# TABLE H

Precise formulations and RC results are given in Tables:

E tested ultrafine aluminosiliceous SiO2/Al2O3 = silica fume (SF) Sifraco ™ C800 98%SiO2
Filler is an UF : violet label or EV

F same as E except that SF is replaced with metakaolin

G same as E (tested SF) except that the filler EV is replaced with a coarse filler CaCO3 Betocarb SL

H same as G except that the tested SF is replaced with metakaolin
Dispersing agent = Chryso Premia 196

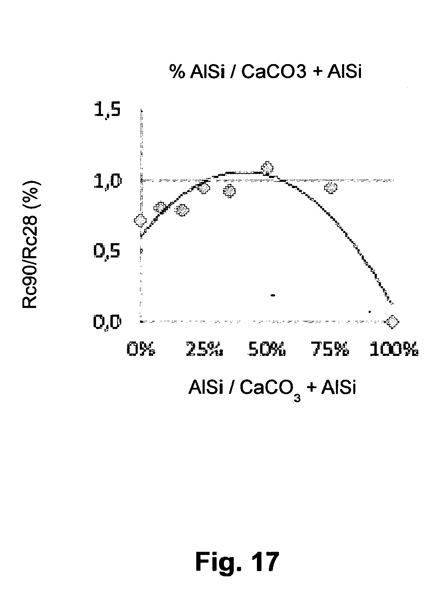

The filler blend is treated in each case with Product B.
In each test, the aluminosiliceous material is tested at 0, 50 or 75 % dry weight/ CaCO3.
One can note a remarkable gain in RC at 28 days and 90 days.
From attached Fig. 17 it can be seen that the ratio Rc90d / Rc28d as a function of the % alumino-siliceous material/ alumino-siliceous material+carbonate based filler (in dry weight) is low when there is no AlSi material (namely no SF), is quite good (close to 1 what means that there is almost no loss in Rc between 25 and 75%, with even a value above 1 (what means, there is a gain in Rc between 28 and 90 days) at 50 %. It can also be seen that there is a sudden drop between 75% and 100%.
Module 2 : one uses a fixed formulation for a mortar, which is given in Table I, with adjustment only on water proportion.

TABLE I

|  | Standard | SiO2/Al2O3 = 0% CaCO3 = 100% | SiO2/Al2O3 = 35% CaCO3 = 65% | SiO2/Al2O3 = 50% CaCO3 = 50% | SiO2/Al2O3 = 75% CaCO3 = 25% |
|---|---|---|---|---|---|
| Reference | ST | M0 | M4 | M6 | M7 |
| % Tested ultrafine SiO2 Al2O3 | 0 | 0 | 35 | 50 | 75 |
| % Violet Label or Betocarb SL | 0 | 100 | 65 | 50 | 25 |
| Mass of tested SiO2/Al2O3 | 0 | 0,0 | 49,7 | 71,0 | 106,5 |
| Mass of Violet Label or Betocarb SL | 0 | 142,0 | 92,3 | 71,0 | 35,5 |
| Total quantity (SiO2/Al2O3 + CaCO3) | 0 | 142,0 | 142,0 | 142,0 | 142,0 |
| Cement: CEM1 42.5R de Gaurain | 472 | 472 | 472 | 472 | 472 |
| Sand | 1676 | 1534 | 1534 | 1534 | 1534 |
| Water | 260 | adjusted | adjusted | adjusted | adjusted |
| % (SiO2-Al2O3) / Cement | 0 | 0,00 | 0,11 | 0,15 | 0,23 |
| Water / Cement ratio | 0,55 | calculated | calculated | calculated | calculated |
| Mortar diameter (mm) | Must be between 300 and 400 mm | | | | |

| VIOLET LABEL + SILICA FUME | Standard | SiO2/Al2O3 = 50%<br>CaCO3 = 50% | SiO2/Al2O3 = 75%<br>CaCO3 = 25% |
|---|---|---|---|
| Reference | ST | M6 | M7 |
| % Tested ultrafine SiO2 Al2O3 | 0 | 50 | 75 |
| % Violet Label | 0 | 50 | 25 |
| Mass of tested SiO2/Al2O3 | 0 | 71,0 | 106,5 |
| Mass of Violet Label | 0 | 71,0 | 35,5 |
| Total quantity (SiO2/Al2O3 + CaCO3) (g) | 0 | 142,0 | 142,0 |
| Cement : CEM I 42,5R de Gaurain (g) | 472 | 472 | 472 |
| Sand (g) | 1676 | 1534 | 1534 |
| Water (g) | 260 | 283 | 303 |
| % (SiO2-Al2O3) / Cement | 0 | 0,15 | 0,23 |
| Water / Cement ratio | 0,55 | 0,60 | 0,64 |
| Mortar diameter (mm) | 205 | 185 | 181 |
| Weight (g) | 1717 | 1699 | 1660 |
| Weight H2O (g) | 973 | 935 | 899 |
| Formulation volume | 1,04 | 1,09 | 1,08 |
| 28d resistances | 74,7 | 94,4 | 83 |
| 28d gain | | 26 | 11 |
| 90d resistances | 85,8 | 103,5 | 91,7 |
| 90d gain | | 21 | 7 |

## TABLE J

| VIOLET LABEL + METAKAOLIN | Standard | SiO2/Al2O3 = 50% CaCO3 = 50% | SiO2/Al2O3 = 75% CaCO3 = 25% |
|---|---|---|---|
| Reference | ST | M6 | M7 |
| % Tested ultrafine SiO2 Al2O3 | 0 | 50 | 75 |
| % Violet Label | 0 | 50 | 25 |
| Mass of tested SiO2/Al2O3 | 0 | 71,0 | 106,5 |
| Mass of Violet Label | 0 | 71,0 | 35,5 |
| Total quantity (SiO2/Al2O3 + CaCO3) (g) | 0 | 142,0 | 142,0 |
| Cement : CEM I 42,5R de Gaurain (g) | 472 | 472 | 472 |
| Sand (g) | 1676 | 1534 | 1534 |
| Water (g) | 260 | 283 | 303 |
| % (SiO2-Al2O3) / Cement | 0 | 0,15 | 0,23 |
| Water / Cement ratio | 0,55 | 0,60 | 0,64 |
| Mortar diameter (mm) | 205 | 208 | 206 |
| Weight (g) | 1717 | 1714 | 1699 |
| Weight H2O (g) | 973 | 956 | 942 |
| Formulation volume | 1,04 | 1,08 | 1,04 |
| 28d resistances | 74,7 | 86,2 | 89,8 |
| 28d gain | | 15 | 20 |
| 90d resistances | 85,8 | 98,4 | 99,1 |
| 90d gain | | 15 | 15 |

## TABLE K

| BETOCARB SL + SILICA FUME | Standard | SiO2/Al2O3 = 0% CaCO3 = 100% | SiO2/Al2O3 = 35% CaCO3 = 65% | SiO2/Al2O3 = 50% CaCO3 = 50% | SiO2/Al2O3 = 75% CaCO3 = 25% |
|---|---|---|---|---|---|
| Reference | ST | M0 | M4 | M6 | M7 |
| % Tested ultrafine SiO2 Al2O3 | 0 | 0 | 35 | 50 | 75 |
| % Betocarb SL | 0 | 100 | 65 | 50 | 25 |
| Mass of tested SiO2/Al2O3 | 0 | 0,0 | 49,7 | 71,0 | 106,5 |
| Mass of Violet Label | 0 | 142,0 | 92,3 | 71,0 | 35,5 |
| Total quantity (SiO2/Al2O3 + CaCO3) (g) | 0 | 142,0 | 142,0 | 142,0 | 142,0 |
| Cement : CEM I 42,5R de Gaurain (g) | 472 | 472 | 472 | 472 | 472 |
| Sand (g) | 1676 | 1534 | 1534 | 1534 | 1534 |
| Water (g) | 260 | 253 | 265 | 280 | 303 |
| % (SiO2-Al2O3) / Cement | 0 | 0,00 | 0,11 | 0,15 | 0,23 |
| Water / Cement ratio | 0,55 | 0,54 | 0,56 | 0,59 | 0,64 |
| Mortar diameter (mm) | 205 | 195 | 183 | 180 | 180 |
| Weight (g) | 1717 | 1714 | 1705 | 1672 | 1657 |
| Weight H2O (g) | 973 | 967 | 945 | 919 | 899 |
| Formulation volume | 1,04 | 1,05 | 1,08 | 1,09 | 1,07 |
| 28d resistances | 74,7 | 77,6 | 95,7 | 90 | 88,2 |
| 28d gain | ✕ | 4 | 28 | 20 | 18 |
| 90d resistances | 85,8 | 88,2 | 102,3 | 100,6 | 97,4 |
| 90d gain | ✕ | 3 | 19 | 17 | 14 |

## TABLE L

| BETOCARB SL + METAKAOLIN | Standard | SiO2/Al2O3 = 0% CaCO3 = 100% | SiO2/Al2O3 = 35% CaCO3 = 65% | SiO2/Al2O3 = 50% CaCO3 = 50% | SiO2/Al2O3 = 75% CaCO3 = 25% |
|---|---|---|---|---|---|
| Reference | ST | M0 | M4 | M6 | M7 |
| % Tested ultrafine SiO2 Al2O3 | 0 | 0 | 35 | 50 | 75 |
| % Betocarb SL | 0 | 100 | 65 | 50 | 25 |
| Mass of tested SiO2/Al2O3 | 0 | 0,0 | 49,7 | 71,0 | 106,5 |
| Mass of Violet Label | 0 | 142,0 | 92,3 | 71,0 | 35,5 |
| Total quantity (SiO2/Al2O3 + CaCO3) (g) | 0 | 142,0 | 142,0 | 142,0 | 142,0 |
| Cement : CEM I 42,5R de Gaurain (g) | 472 | 472 | 472 | 472 | 472 |
| Sand (g) | 1676 | 1534 | 1534 | 1534 | 1534 |
| Water (g) | 260 | 253 | 265 | 280 | 303 |
| % (SiO2-Al2O3) / Cement | 0 | 0,00 | 0,11 | 0,15 | 0,23 |
| Water / Cement ratio | 0,55 | 0,54 | 0,56 | 0,59 | 0,64 |
| Mortar diameter (mm) | 205 | 195 | 189 | 198 | 213 |
| Weight (g) | 1717 | 1714 | 1726 | 1685 | 1694 |
| Weight H2O (g) | 973 | 967 | 968 | 940 | 939 |
| Formulation volume | 1,04 | 1,05 | 1,06 | 1,07 | 1,05 |
| 28d resistances | 74,7 | 77,6 | 91,3 | 86,9 | 90,6 |
| 28d gain | ✕ | 4 | 22 | 16 | 21 |
| 90d resistances | 85,8 | 88,2 | 101,2 | 100 | 96,6 |
| 90d gain | ✕ | 3 | 18 | 17 | 13 |

## TABLE M

Precise formulations and results are given as for Module 1 in Tables:

J carbonate filler EV
Aluminosiliceous material SF Sifraco C800
K carbonate filler EV
Aluminosiliceous (AlSi) material MK Premix MK (d50= 3 , BET = 3,8 m2/g)
L carbonate filler Betocarb SL coarse CaCO3
Aluminosiliceous material SF Sifraco C800
M carbonate filler Betocarb SL
Aluminosiliceous MK

We note as in Module 1 an important gain in RC 28d and RC 90d.

**Example 4**

**Refers to Tables N, O, P**

| Specimen | Sand | g | Cement | g | | Filler g | | Ultrafine % | g | | Ultrafine % | g | Water g | Additive F | % | g | Consistency mm | Air mass g | Water mass g | density kg/m3 | Rc28d Mpa | %rc28d | Rc90d Mpa | Observation |
|---|---|---|---|---|---|---|---|---|---|---|---|---|---|---|---|---|---|---|---|---|---|---|---|---|
| Specimen | SAN099 | 1676 | CEM099 | 472 | | 0 | | | 0 | | | 0 | 260 | | 0,00 | 0,0 | 200 | 1757 | 993 | 2,30 | 44,8 | | | water releasing (« resuant ») |
| E1 | SAN099 | 1645 | CEM099 | 472 | A | 142 | | 0 | 0 | | | 0 | 223 | SP B | 0,21 | 1,0 | 170 | 1752 | 982 | 2,27 | 57,4 | | | slightly water releasing, compact |
| E2 | SAN099 | 1645 | CEM099 | 472 | | 0 | B | 100 | 142 | | | 0 | 223 | SP B | 0,32 | 1,5 | 235 | 1753 | 993 | 2,31 | 61,3 | 4 | | water releasing |
| E3 | SAN099 | 1645 | CEM099 | 472 | A | 142 | B | 0 | 0 | | | 0 | 223 | SP B | 0,26 | 1,3 | 170 | 1739 | 977 | 2,28 | 59,0 | 0 | | slightly water releasing |
| E4 | SAN099 | 1645 | CEM099 | 472 | A | 135 | B | 5 | 7 | | | 0 | 223 | SP B | 0,32 | 1,5 | 177 | 1808 | 1034 | 2,34 | 63,8 | 8 | | slightly water releasing |
| E5 | SAN099 | 1645 | CEM099 | 472 | A | 127 | B | 11 | 15 | | | 0 | 223 | SP B | 0,32 | 1,5 | 185 | 1774 | 1009 | 2,32 | 62,5 | 6 | | water releasing |
| E6 | SAN099 | 1645 | CEM099 | 472 | A | 120 | B | 15 | 22 | | | 0 | 223 | SP B | 0,32 | 1,5 | 195 | 1782 | 1021 | 2,34 | 64,4 | 9 | | water releasing |
| E7 | SAN099 | 1645 | CEM099 | 472 | A | 113 | B | 20 | 29 | | | 0 | 223 | SP B | 0,32 | 1,5 | 193 | 1754 | 992 | 2,30 | 62,1 | 5 | | water releasing |
| E8 | SAN099 | 1645 | CEM099 | 472 | A | 142 | | | 0 | C | 0 | 0 | 223 | SP B | 0,32 | 1,5 | 177 | 1739 | 977 | 2,28 | 58,1 | 0 | | slightly water releasing |
| E8R | SAN099 | 1645 | CEM099 | 472 | A | 142 | | | 0 | C | 0 | 0 | 223 | SP B | 0,42 | 2,0 | 195 | 1806 | 1040 | 2,36 | 65,5 | 0 | | slightly water releasing |
| E9 | SAN099 | 1645 | CEM099 | 472 | A | 114 | | | 0 | C | 20 | 28 | 223 | SP B | 0,32 | 1,5 | 155 | 1735 | 965 | 2,25 | 62,7 | -4 | | slightly water releasing, no gaz bubble (vibrating table) |
| E9R | SAN099 | 1645 | CEM099 | 472 | A | 114 | | | 0 | C | 20 | 28 | 223 | SP B | 0,53 | 2,5 | 210 | 1737 | 973 | 2,27 | 68,1 | 4 | | water releasing |
| E10 | SAN099 | 1645 | CEM099 | 472 | A | 92 | | | 0 | C | 35 | 50 | 223 | SP B | 0,32 | 1,5 | 137 | 1730 | 961 | 2,25 | 68,2 | 4 | | dry and homogeneous, no gaz bubble (vibrating table) |
| E10R | SAN099 | 1645 | CEM099 | 472 | A | 92 | | | 0 | C | 35 | 50 | 223 | SP B | 0,64 | 3,0 | 187 | 1723 | 956 | 2,25 | 68,8 | 5 | | water releasing |
| E11 | SAN099 | 1645 | CEM099 | 472 | A | 57 | | | 0 | C | 60 | 85 | 223 | SP B | 0,32 | 1,5 | 125 | 1725 | 956 | 2,24 | 72,8 | 11 | | dry and homogeneous, no gaz bubble (vibrating table) |
| E11R | SAN099 | 1645 | CEM099 | 472 | A | 57 | | | 0 | C | 60 | 85 | 223 | SP B | 0,85 | 4,0 | 195 | 1752 | 985 | 2,28 | 79,8 | 22 | | water releasing |
| E12 | SAN099 | 1645 | CEM099 | 472 | A | 0 | | | 0 | C | 100 | 142 | 223 | SP B | 0,32 | 1,5 | 107 | 1709 | 947 | 2,24 | 72,1 | 10 | | "crumble", no gaz bubble (vibrating table) |
| E12R | SAN099 | 1645 | CEM099 | 472 | A | 0 | | | 0 | C | 100 | 142 | 223 | SP B | 1,06 | 5,0 | 175 | 1690 | 926 | 2,21 | 77,1 | 18 | | water releasing |
| E13 | SAN099 | 1645 | CEM099 | 472 | A | 142 | | | 0 | D | 0 | 0 | 223 | SP B | 0,42 | 2,0 | 207 | 1812 | 1045 | 2,36 | 65,5 | 0 | | water releasing |
| E14 | SAN099 | 1645 | CEM099 | 472 | A | 114 | | | 0 | D | 20 | 28 | 223 | SP B | 0,64 | 3,0 | 210 | 1822 | 1053 | 2,37 | 72,9 | 11 | | water releasing |
| E15 | SAN099 | 1645 | CEM099 | 472 | A | 92 | | | 0 | D | 35 | 50 | 223 | SP B | 0,85 | 4,0 | 217 | 1842 | 1066 | 2,37 | 73,8 | 13 | | water releasing |
| E16 | SAN099 | 1645 | CEM099 | 472 | A | 57 | | | 0 | D | 60 | 85 | 223 | SP B | 1,06 | 5,0 | 193 | 1814 | 1045 | 2,36 | 84,5 | 29 | | water releasing |
| E17 | SAN099 | 1645 | CEM099 | 472 | A | 0 | | | 0 | D | 100 | 142 | 223 | SP B | 1,27 | 6,0 | 160 | 1743 | 972 | 2,26 | 80,7 | 23 | | slightly water releasing |
| E18 | SAN099 | 1645 | CEM098 | 472 | A | 142 | | | 0 | E | 0 | 0 | 223 | SP B | 0,42 | 2,0 | 188 | 1731 | 969 | 2,27 | 62,0 | 0 | | water releasing |
| E18R | SAN099 | 1645 | CEM099 | 472 | A | 142 | | | 0 | E | 0 | 0 | 223 | SP B | 0,42 | 2,0 | 197 | 1824 | 1051 | 2,36 | | | | water releasing |
| E19 | SAN099 | 1645 | CEM098 | 472 | A | 114 | | | 0 | E | 20 | 28 | 223 | SP B | 0,42 | 2,0 | 193 | 1747 | 979 | 2,27 | 65,2 | 5 | | water releasing |
| E19R | SAN099 | 1645 | CEM099 | 472 | A | 114 | | | 0 | E | 20 | 28 | 223 | SP B | 0,42 | 2,0 | 190 | 1785 | 1018 | 2,33 | | | | water releasing |
| E20 | SAN099 | 1645 | CEM098 | 472 | A | 92 | | | 0 | E | 35 | 50 | 223 | SP B | 0,42 | 2,0 | 185 | 1727 | 963 | 2,26 | 61,8 | 0 | | water releasing |
| E20R | SAN099 | 1645 | CEM099 | 472 | A | 92 | | | 0 | E | 35 | 50 | 223 | SP B | 0,42 | 2,0 | 195 | 1808 | 1031 | 2,33 | | | | water releasing |
| E21 | SAN099 | 1645 | CEM098 | 472 | A | 57 | | | 0 | E | 60 | 85 | 223 | SP B | 0,42 | 2,0 | 180 | 1724 | 960 | 2,26 | 63,2 | 2 | | water releasing |
| E21R | SAN099 | 1645 | CEM099 | 472 | A | 57 | | | 0 | E | 60 | 85 | 223 | SP B | 0,42 | 2,0 | 215 | 1791 | 1024 | 2,34 | | | | water releasing (« très resuant) |
| E22 | SAN099 | 1645 | CEM098 | 472 | A | 0 | | | 0 | E | 100 | 142 | 223 | SP B | 0,42 | 2,0 | 165 | 1725 | 963 | 2,26 | 65,6 | 6 | | slightly water releasing, sticky. |
| E22R | SAN099 | 1645 | CEM099 | 472 | A | 0 | | | 0 | E | 100 | 142 | 223 | SP B | 0,53 | 2,5 | 240 | 1830 | 1055 | 2,36 | | | | water releasing (« très resuant) |

TABLE N

| Specimen | Sand | g | Cement | g | Filler | g | Ultrafine | % | g | Ultrafine | % | g | Water g | Additive F | % | g | Consistancy mm | air mass g | water mass g | density kg/m3 | Rc28d Mpa | %rc28d | Rc90d Mpa | Observation |
|---|---|---|---|---|---|---|---|---|---|---|---|---|---|---|---|---|---|---|---|---|---|---|---|---|
| Specimen | SAN099 | 1676 | CEM099 | 472 | | 0 | | | 0 | | | 0 | 260 | | 0,00 | 0,0 | 200 | 1757 | 993 | 2,30 | 44,8 | | | water releasing («resuant») |
| E23 | SAN099 | 1645 | CEM098 | 472 | | 0 | B | | 142 | C | 0 | 0 | 223 | SP B | | 2,0 | 205 | 1758 | 987 | 2,28 | 62,6 | 0 | | water releasing |
| E23R | SAN099 | 1645 | CEM099 | 472 | | 0 | B | | 142 | C | 0 | 0 | 223 | SP B | | 2,0 | 245 | 1833 | 1055 | 2,36 | | | | water releasing («très resuant») |
| E24 | SAN099 | 1645 | CEM099 | 472 | | 0 | B | | 114 | C | 19,72 | 28 | 223 | SP B | | 2,0 | 217 | 1739 | 972 | 2,27 | 66,5 | 6 | | water releasing |
| E25 | SAN099 | 1645 | CEM099 | 472 | | 0 | B | | 92 | C | 35,21 | 50 | 223 | SP B | | 3,0 | 230 | 1801 | 1031 | 2,34 | 80,0 | 28 | | water releasing; Rc 80.3/81.1/74.6 |
| E26 | SAN099 | 1645 | CEM099 | 472 | | 0 | B | | 57 | C | 59,86 | 85 | 223 | SP B | | 4,0 | 195 | 1700 | 934 | 2,22 | 72,5 | 16 | | water releasing |
| E27 | SAN099 | 1645 | CEM099 | 472 | | 0 | B | | 0 | C | 100 | 142 | 223 | SP B | | 5,0 | 195 | 1686 | 922 | 2,21 | 77,6 | 24 | | water releasing |
| E28 | SAN099 | 1645 | CEM099 | 472 | | 0 | B | | 142 | D | 0 | 0 | 223 | SP B | | 1,0 | 175 | 1744 | 977 | 2,27 | 54,7 | 0 | | water releasing |
| E29 | SAN099 | 1645 | CEM099 | 472 | | 0 | B | | 114 | D | 19,72 | 28 | 223 | SP B | | 2,0 | 213 | 1764 | 997 | 2,30 | 65,7 | 20 | | water releasing |
| E30 | SAN099 | 1645 | CEM099 | 472 | | 0 | B | | 92 | D | 35,21 | 50 | 223 | SP B | | 3,0 | 205 | 1740 | 974 | 2,27 | 66,6 | 22 | | water releasing |
| E31 | SAN099 | 1645 | CEM099 | 472 | | 0 | B | | 57 | D | 59,86 | 85 | 223 | SP B | | 4,0 | 197 | 1732 | 968 | 2,27 | 73,7 | 35 | | water releasing |
| E32 | SAN099 | 1645 | CEM099 | 472 | | 0 | B | | 0 | D | 100 | 142 | 223 | SP B | | 6,0 | 180 | 1757 | 993 | 2,30 | 85,0 | 55 | | sligthly water releasing («légèrement resuant») |
| E33 | SAN099 | 1645 | CEM099 | 472 | | 0 | B | | 142 | E | 0 | 0 | 223 | SP B | | 1,5 | 203 | 1740 | 974 | 2,27 | 58,7 | 0 | | water releasing |
| E34 | SAN099 | 1645 | CEM099 | 472 | | 0 | B | | 114 | E | 19,72 | 28 | 223 | SP B | | 1,5 | 187 | 1744 | 979 | 2,28 | 59,9 | 2 | | water releasing |
| E35 | SAN099 | 1645 | CEM099 | 472 | | 0 | B | | 92 | E | 35,21 | 50 | 223 | SP B | | 1,5 | 180 | 1737 | 974 | 2,28 | 60,2 | 3 | | water releasing |
| E36 | SAN099 | 1645 | CEM099 | 472 | | 0 | B | | 57 | E | 59,86 | 85 | 223 | SP B | | 2,0 | 215 | 1758 | 990 | 2,29 | 62,3 | 6 | | water releasing, slightly outgassing |
| E37 | SAN099 | 1645 | CEM099 | 472 | | 0 | B | | 0 | E | 100 | 142 | 223 | SP B | | 2,0 | 235 | 1796 | 1027 | 2,34 | 71,3 | 21 | | water releasing («très résuant»), outgassing |
| E38 | SAN099 | 1645 | CEM099 | 472 | A | 142 | B | 0 | 0 | | | 0 | 223 | SP B | | 1,8 | 185 | 1797 | 1031 | 2,35 | 63,9 | | | sligthly water releasing («légèrement resuant») |
| E39 | SAN099 | 1645 | CEM099 | 472 | A | 127 | B | 10,56 | 15 | C | | 0 | 223 | SP B | | 2,0 | 217 | 1842 | 1064 | 2,37 | 63,9 | | | water releasing («très resuant») |
| E40 | SAN099 | 1645 | CEM099 | 472 | A | 101 | B | 28,87 | 13 | C | | 28 | 223 | SP B | | 2,0 | 187 | 1731 | 966 | 2,26 | 66,9 | | | water releasing |
| E41 | SAN099 | 1645 | CEM099 | 472 | A | 81 | B | 42,96 | 11 | C | | 50 | 223 | SP B | | 3,0 | 220 | 1785 | 1014 | 2,32 | 79,5 | | | water releasing |
| E42 | SAN099 | 1645 | CEM099 | 472 | A | 50 | B | 64,79 | 7 | C | | 85 | 223 | SP B | | 4,0 | 183 | 1710 | 944 | 2,23 | 76,0 | | | water releasing |
| E43 | SAN099 | 1645 | CEM099 | 472 | | 0 | B | 100 | 0 | C | | 142 | 223 | SP B | | 5,0 | 167 | 1720 | 945 | 2,22 | 80,7 | | | water releasing and sticky |
| E44 | SAN099 | 1645 | CEM099 | 472 | A | 142 | B | 0 | 0 | | | 0 | 223 | SP B | | 2,0 | 197 | 1842 | 1064 | 2,37 | 64,0 | | | water releasing |
| E45 | SAN099 | 1645 | CEM099 | 472 | A | 127 | B | 10,56 | 15 | D | | 0 | 223 | SP B | | 2,0 | 223 | 1830 | 1058 | 2,37 | 63,4 | | | water releasing («très resuant») |
| E46 | SAN099 | 1645 | CEM099 | 472 | A | 101 | B | 28,87 | 13 | D | | 28 | 223 | SP B | | 2,0 | 170 | 1741 | 974 | 2,27 | 64,6 | | | sligthly water releasing |
| E47 | SAN099 | 1645 | CEM099 | 472 | A | 81 | B | 42,96 | 11 | D | | 50 | 223 | SP B | | 3,0 | 185 | 1784 | 1014 | 2,32 | 74,5 | | | water releasing |
| E48 | SAN099 | 1645 | CEM099 | 472 | A | 50 | B | 64,79 | 7 | D | | 85 | 223 | SP B | | 4,0 | 180 | 1763 | 1001 | 2,31 | 81,6 | | | water releasing |
| E49 | SAN099 | 1645 | CEM099 | 472 | | 0 | B | 100 | 0 | D | | 142 | 223 | SP B | | 6,0 | 175 | 1743 | 983 | 2,29 | 83,6 | | | sligthly water releasing («légèrement resuant») |
| E50 | SAN099 | 1645 | CEM099 | 472 | A | 142 | B | 0 | 0 | | | 0 | 223 | SP B | | 2,0 | 220 | 1832 | 1062 | 2,38 | 60,1 | | | water releasing («très resuant») |
| E51 | SAN099 | 1645 | CEM099 | 472 | A | 127 | B | 10,56 | 15 | E | | 0 | 223 | SP B | | 2,0 | 213 | 1828 | 1073 | 2,42 | 64,0 | | | water releasing |
| E52 | SAN099 | 1645 | CEM099 | 472 | A | 101 | B | 28,87 | 13 | E | | 28 | 223 | SP B | | 2,0 | 217 | 1749 | 1038 | 2,46 | 65,6 | | | water releasing |
| E53 | SAN099 | 1645 | CEM099 | 472 | A | 81 | B | 42,96 | 11 | E | | 50 | 223 | SP B | | 2,0 | 233 | 1815 | 1046 | 2,36 | 68,1 | | | water releasing («très resuant») |
| E54 | SAN099 | 1645 | CEM099 | 472 | A | 50 | B | 64,79 | 7 | E | | 85 | 223 | SP B | | 2,0 | 235 | 1820 | 1043 | 2,34 | 69,2 | | | water releasing («très resuant») |
| E55 | SAN099 | 1645 | CEM099 | 472 | | 0 | B | 100 | 0 | E | | 142 | 223 | SP B | | 2,0 | 235 | 1783 | 1017 | 2,33 | 71,9 | | | water releasing («très resuant») |

TABLE O

EP 2 634 153 A1

| | Sand | g | Cement | g | Filler | g | Ultrafine % | g | Ultrafine % | g | Water g | Additive F | % | g | Consistency mm | air mass g | water mass g | density kg/m3 | Rc28d Mpa | %rc28d | Rc90d Mpa | Observation |
|---|---|---|---|---|---|---|---|---|---|---|---|---|---|---|---|---|---|---|---|---|---|---|
| Specimen | SAN099 | 1676 | CEM099 | 472 | | 0 | | 0 | | 0 | 260 | | 0,00 | 0,0 | 200 | 1757 | 993 | 2,30 | 44,8 | | | water releasing (« resuant ») |
| | | | | | | | | | | | | | | | | | | | Rc24h | Rc28j | | |
| E56 | SAN099 | 1645 | CEM099 | 472 | A | 142 | | | | | 223 | SP B | | 2,0 | 217 | 1825 | 1053 | 2,36 | 22,3 | 55,2 | | water releasing |
| E57 | SAN099 | 1695 | CEM099 | 472 | A | 92 | | | | | 223 | SP B | | 2,0 | 193 | 1843 | 1065 | 2,37 | 20,1 | 50,8 | | water releasing |
| E58 | SAN099 | 1745 | CEM099 | 472 | A | 42 | | | | | 223 | SP B | | 3,0 | 205 | 1837 | 1063 | 2,37 | 21,3 | 46,2 | | water releasing and hollow |
| E59 | SAN099 | 1787 | CEM099 | 472 | A | 0 | | | | | 223 | SP B | | 3,0 | 187 | 1826 | 1051 | 2,36 | 19,0 | 43,5 | | water releasing and hollow |
| E60 | SAN099 | 1595 | CEM099 | 472 | A | 192 | | | | | 223 | SP B | | 1,5 | 175 | 1724 | 968 | 2,28 | 20,2 | 48,8 | | water releasing and segregating |
| E61 | SAN099 | 1545 | CEM099 | 472 | A | 242 | | | | | 223 | SP B | | 1,8 | 200 | 1743 | 984 | 2,30 | 22,4 | 51,8 | | water releasing and segregating |
| E62 | SAN099 | 1645 | CEM099 | 472 | F | 142 | | | | | 223 | SP B | | 2,0 | 187 | 1750 | 986 | 2,29 | 20,3 | rc7 | | |
| E63 | SAN099 | 1695 | CEM099 | 472 | F | 92 | | | | | 223 | SP B | | 2,0 | 207 | 1822 | 1049 | 2,36 | 21,4 | rc7 | | |
| E64 | SAN099 | 1745 | CEM099 | 472 | F | 42 | | | | | 223 | SP B | | 2,0 | 193 | 1845 | 1065 | 2,37 | 19,4 | rc7 | | |
| E65 | SAN099 | 1787 | CEM099 | 472 | F | 0 | | | | | 223 | SP B | | 2,0 | 180 | 1823 | 1050 | 2,36 | 19,0 | rc7 | | |
| E66 | SAN099 | 1595 | CEM099 | 472 | F | 192 | | | | | 223 | SP B | | 2,0 | 175 | 1779 | 1005 | 2,30 | 22,9 | rc7 | | |
| E67 | SAN099 | 1545 | CEM099 | 472 | F | 242 | | | | | 223 | SP B | | 2,0 | 207 | 1744 | 988 | 2,31 | 20,4 | rc7 | | |
| | | | | | | | | | | | | | | | | Vfunnel (s) | | | | | | |
| E68 | SAN099 | 1645 | CEM099 | 472 | A | 142 | | | | | 223 | SP B | | 3,0 | 225 | | | | | | | heavy, sticky |
| E69 | SAN099 | 1645 | CEM099 | 472 | A | 142 | | | | | 223 | SP B | | 4,0 | 245 | | | | | | | heavy, compact, almost segregation |
| E70 | SAN099 | 1400 | CEM099 | 472 | F | 387 | | | | | 223 | SP B | | 2,0 | 387 | | | 11 | | | | full, flexible, outgassing |
| E71 | SAN099 | 1500 | CEM099 | 472 | F | 287 | | | | | 223 | SP B | | 2,0 | 307 | | | | | | | heavy and sticky |
| E72 | SAN099 | 1600 | CEM099 | 472 | F | 187 | | | | | 223 | SP B | | 2,0 | 273 | | | 36 | | | | heavy and compact |
| E73 | SAN099 | 1700 | CEM099 | 472 | F | 87 | | | | | 223 | SP B | | 2,0 | 187 | | | | | | | heavy , almost homogeneous, water releasing |
| E74 | SAN099 | 1300 | CEM099 | 472 | F | 487 | | | | | 223 | SP B | | 2,0 | 135 | | | 100 | | | | |
| E75 | SAN099 | 1500 | CEM099 | 472 | F | 287 | | | | | 223 | SP B | | 2,0 | | | | | | | | |
| E76 | SAN099 | 1400 | CEM099 | 472 | A | 387 | | | | | 223 | SP B | | 4,0 | 370 | | | | | | | heavy , outgassing and segregation |
| E77 | SAN099 | 1500 | CEM099 | 472 | A | 287 | | | | | 223 | SP B | | 4,0 | 368 | | | | | | | heavy , outgassing and segregation |
| E78 | SAN099 | 1600 | CEM099 | 472 | A | 187 | | | | | 223 | SP B | | 4,0 | 265 | | | 36 | | | | slow, water releasing and segregation |
| E79 | SAN099 | 1700 | CEM099 | 472 | A | 87 | | | | | 223 | SP B | | 4,0 | 215 | | | | | | | heavy, slow and water releasing |
| E80 | SAN099 | 1300 | CEM099 | 472 | A | 487 | | | | | 223 | SP B | | 4,0 | 100 | | | | | | | dry and homogenous |

TABLE P

In the tables D, E, F :

A is a coarse CaCO3 filler Betocarb SL as decribed above

B is a treating ultrafine carbonate filler EV described above

C is a treating ultrafine filler Silica Fume

D is a treating ultrafine filler metakaolin

E is a treating siliceous filler

F is a coarse CaCO3 filler Betocarb HP-OG (d50= about 6 $\mu$m , Blaine 380 m$^2$/kg)

SP B is the treating superplastifier as described above.
The cement brand is the standardized cement 42,5 R Gaurain (CEM)
The sand is Standardized sand Under EN 196 - 1 (SAN)
The column « consistency » provides the cone diameter.
This examples provides numerous possible combinations and data and will therefore allow the skilled man to reach the best compromises between Rc and cone diameter.

**Claims**

1. **PROCESS** for the preparation of cement / mortar / concrete compositions or systems, (for simplicity hereafter **"cement"** compositions or systems), featuring an improved compressive strength Rc namely at 28 days and 90 days, containing at least a "carbonate-based filler", **characterized in that** it comprises at least one step where the said at least one "carbonate-based filler" is mixed or blended with at least one aluminosiliceous material, and the obtained "fillers blend" is treated with an efficient treating amount of at least one treating agent consisting of or comprising superplastifier(s) .

2. PROCESS according to claim 1 for preparing the said "cement" compositions or systems **characterized by** :

   a) providing a powder of at least a dry calcium carbonate-based filler, hereafter "filler or filler(s);
   b) mixing the said filler(s) with at least an aluminosiliceous material
   c) treating by mixing the resulting "fillers blend" with an efficient treating amount of at least one superplastifier, thus producing "treated fillers blend",
   d) introducing the said treated fillers blend into a kneading or mixing device already containing mix water or a composition of mix water possibly containing routine or "non-interfering" additives ("mix water composition") (hereafter for simplicity "mixing water")
   e) optionally adding before or after the step c), preferably before, aggregates such as sand and/or gravel, and possibly other "non interfering" routine additives or adjuvants,
   f) kneading or mixing the said load during an efficient period of time,
   g) recovering the said "cement" composition.

3. Process according to claim 1 or 2 **characterized in that** the dosage of the alumino-siliceous SiO2/Al2O3 material represents 8.5 to 100 % / dry weight of carbonate-based filler(s), preferably 8.5 to 40, or 10 to 70 - 85 % / dry weight of carbonate-based filler(s), preferably 30 - 35 - 40 % / dry weight of carbonate-based filler(s) .

4. Process according to claim 1 to 3 **characterized in that** the dosage of the alumino-siliceous SiO2/Al2O3 material represents 25 to 75%, preferably 50 % / dry weight of carbonate-based filler(s) + aluminosiliceous material.

5. Process according to claim 4 wherein the aluminosiliceous material is a silica fume d50=1.2 microns, Blaine surface > 1500 m2/kg, BET=16 m2/g.

6. Process according to any of the preceding claims **characterized in that** the said superplastifier is selected among polycarboxylates, polycarboxylate ethers, or products manufactured from sulfonated naphthalene condensate or sulfonated melamine formaldehyde.

7. Process according to any of the preceding claims **characterized in that** the said superplastifier is of the polycarboxylate ether type.

8. Process according to any of the preceding claims **characterized in that** the dosage in superplastifier(s) is ranging from 0.03 or 0.05 to 0.1% to 2 - 3% dry weight of cement, or 0.3 to 2 - 3 kg for 100 kg of cement, preferably 0.8 to 1.2 kg / 100 kg of cement, on a DRY / DRY basis or, in laboratory conditions, ranges from 0.05 to 0.1 % by weight of the carbonate (DRY) that is 0.1 to 0.3 kg /100 kg of cement, on a DRY / DRY basis.

9. Process according to any of the preceding claims **characterized in that** the superplastifier treating agent(s) can be only superplastifier(s) or blends of superplastifier(s) with non-interfering plasticizer(s) and/or inert, additives.

10. Process according to claim 9 **characterized in that** the ratio superplastifier(s) / plasticizer(s) is from 100/0 to 95/5 - 90/10, preferably no less than 85/15 on a weight dry basis.

11. Process according to any of the preceding claims **characterized in that** the said calcium carbonate - based filler (s) are fillers that contain(s) only calcium carbonate(s) (possibly of various origins, such as various natural rocks or various PCCs) - which means with no other filler of a different type, such as kaolin, bentonite, etc.), and is/are preferably provided (when the filler(s) is/are or contain(s) GCC(s)) by a carbonated rock or more generally mineral material(s) comprising at least 50 - 65 % by weight (dry) of $CaCO_3$, preferably more than 80 %, still more preferably more than 90 %.

12. Process according to any of the preceding claims **characterized in that** the said carbonate-based fillers are selected among:

   - natural calcium carbonate(s) or ground calcium carbonate(s) (GCC(s)) such as GCC from marble, chalk, calcite, or from other natural forms of natural calcium carbonates;
   - PCC(s) which is a precipitated calcium carbonate,
   - or a mixture of said $CaCO_3$ - containing rocks or mineral materials with each other as well as blends or mixtures of GCC(s) and/or PCC(s) and /or as well as MCC(s) and blends of MCC(s) and Gcc(s) and/or PCC(s).

13. Process according claim 11 or 12 **characterized in that** the GCC / PCC ratio is chosen from 0 - 100 to 100 - 0 % by dry weight, preferably from 30-70 to 70 /30 % by dry weight.

14. Process according to any of the preceding claims **characterized in that** said carbonate-based filler(s) can be

   - ultrafine filler(s) or
   - coarser or coarse filler(s)
   (of the calcium carbonate containing type as defined above).

15. Process according to any of the preceding claims **characterized in that** "Ultrafines particles" or more simply **"ultrafines"** or still more simply **"UFs"** are defined by

   - a d50 from about 1 micron to about 5 or 6 microns, preferably from 1 to 3 microns, and still better of about 2
   - 3 microns, usually <5 microns.
   - **and**
   - a high specific surface , usually defined as BLAINE > 1000 m2/kg pref. > 1500 m2/kg, pref. up to 2000 m2/kg (or a corresponding BET or SSP m2/g)
   - while coarse carbonate-based fillers feature a d50 > 5 -6 microns and a Blaine surface of < 1000 m2/kg

16. Process according to claim 15 **characterized in that** UFs carbonate-based fillers are selected among :

   - calcites (d50 about 1 micron),
   - marbles of about 3 microns d50, or marbles of about 1 to 5 - 6 microns d50,
   - a carbonate of clay type (d50 1 resp. 2 microns),
   - a carbonate of marble (about 2.4 micron d50),
   - PCCs such as of d50 = 1.52 $\mu$m
   - MCCs such as of d50 = 2.29 $\mu$m

17. Process according to any preceding claims **characterized in that** "aluminosiliceous material" is a product or blend of products mainly made of siliceous product(s) and/or aluminous product(s) which may contain only a minor amount of non aluminosiliceous products, such as impurities , and are preferably selected among aluminum oxides such as various forms of Al2O3, silica fumes (SF) such as various forms of Si02 or Si02 fumes, calcined kaolin or "metakaolin" (MK), pozzolanic products (used by cement industry) such as blast furnace slags, ultrafine siliceous products from the industry etc.... , and preferably blends of Al2O3/SiO2.

18. Process according to claim 17 **characterized in that** the said alumino-siliceous material is selected among :

>   - a product containing 98% Si02 and a minor amount (0.71%) of Al2O3, and traces of CaO and MgO(SSP= 7.49 d50 (median diameter) = 1.86 micron.
>   - a product which is a silica fume obtained while preparing silicium d50= 1.2 micron Blaine > 1600 m2/kg BET = 16 m2/g
>   - a metakaolin of d50 = 3 microns BET = 3.8 m2/g
>   - a product of d50 = 14 microns BET = 6.12 m2/g

19. Process according to any preceding claims **characterized in that** the said "carbonate-based filler(s)" comprises, or consists of, at least a coarse carbonate-based filler, and/or at least an ultrafine filler of "UF".

20. Process according to any preceding claims **characterized in that** the fillers may consist of calcium carbonate(s), the said filler(s) are made of calcium carbonate(s) or blends thereof, that is GCCs or PCCs or blends of GCCs or blends of PCCs or blends of GCCs and PCCs, optionally mixed with non interfering fillers,

21. Process according claim 14 **characterized in that** the said coarse carbonate-based fillers can be "low, medium or HP" fillers, and UF(s) are usually UF(s)

22. Process according to any preceding claims **characterized in that** it contains a step where a small amount of "fluidifier" is introduced in the mixing/kneading device.

23. Process according to claim 22, **characterized in that** said "fluidifier" is a "modified polycarboxylate".

24. Process according to claim 22 or 23, **characterized in that** the dosage of said fluidifier is 3 and 4 g , such as 3.4 - 3.7 g, preferably 3.5 g / dry weight of the total cement composition.

25. Process according to any preceding claims **characterized in that** the said filler(s) blend is/are efficiently treated with the superplastifier(s) before being introduced in the kneading or mixing device , such as in an outside mixing Laboratory equipment or in an industrial mixer or other industrial kneading or mixing equipment.

26. Process according to any preceding claims **characterized in that** the said filler(s) blend is / are treated after having being introduced in the kneading or mixing device ("inside **treatment")**, wherein the said filler(s) blend is / are efficiently treated with the superplastifier(s) after having being introduced in the kneading or mixing device ("inside treatment") with the filler(s) blend and the efficient treating amount of the superplastifier treating agent(s) being introduced in the kneading or mixing device either simultaneously or in a manner such that the filler(s) and the efficient amount of the superplastifier treating agent(s) are introduced separately BUT at a very close location and time.

27. Process according to any preceding claims **characterized in that** the said filler(s) blend is / are efficiently treated with the superplastifier(s) partially before being introduced in the kneading or mixing device ("partial pre-treatment") and partially after having been introduced in the pre-treated state in the said mixing or kneading device, the total of the two partial treatments with superplastifier(s) being "efficient" , with the second part or amount of the superplastifier(s) treating agent(s) being introduced in the kneading or mixing device either simultaneously with the pre-treated fillers blend or in a manner such that the pretreated filler(s) blend and the second part of the treating agent(s) are introduced separately BUT at a very close location and time .

28. Process according to any preceding claims **characterized in that** when the filler(s) blend is / are to be treated at least partially inside the kneading or mixing device, ("mixed treatment"), a corresponding amount or proportion of treating superplastifier(s) is added directly into the said kneading or mixing device or in admixture with the considered filler(s) blend just before the introduction in the kneading or mixing device, for example, on the weighting device ("balance") which is provided just before the powdered products are introduced into the kneading or mixing device.

29. Process according to any preceding claims **characterized in that** the point and time of introduction of the said proportion of superplastifier(s) treating agent be as close as possible to the point and time of introduction of the partially treated filler(s) blend.

30. Process according to claim 1 **characterized in that** the "efficient period of time", is a total period of time leading to an homogeneous mixture or blend, in the order of 2 - 15 min, preferably, for the "standard" mixtures or blends, 30 - 60 s, or 35 - 65 s or a much longer time of 1 - 3 to 10 - 15 min.

31. Process according to any preceding claims **characterized in that** one first introduces the aggregates such as sand and gravel into the kneading or mixing device, and mix them optionally with a small amount of water and/or of fluidifier, before performing the other steps.

32. Process according to any preceding claims **characterized in that** the total efficient time of mixing/kneading consists of a kneading time of 10 - 15 - 20 s for the aggregates such as gravel and sand (dry kneading or mixing), then of 10 s for the kneading or mixing of the hydraulic binder of the cement composition and untreated filler(s) blend, then 10 - 15 s for the kneading or mixing of the fillers blend and hydraulic binder with the fluidifier treatment agent(s) and mix water, then 5 - 15 s for the final kneading or mixing with "routine additives".

33. Process according to claim 32 **characterized in that** the mixing or kneading device are operated in a batch mode , a semi-continuous mode, or a continuous mode.

34. PRODUCT **characterized in that** it comprises:

a) at least a " carbonate-based "filler"" as defined in any of the preceding claims and at least an aluminosiliceous material as defined in any of the preceding claims, what provides a "fillers blend".

35. Product according to claim 34 **characterized in that** the dosage of the alumino-siliceous SiO2/Al2O3 material represents 8.5 to 100 % / dry weight of carbonate-based filler(s), preferably 8.5 to 40, or 10 to 70 - 85 % / dry weight of carbonate-based filler(s), preferably 30 - 35 - 40 % / dry weight of carbonate-based filler(s) .

36. Product according to claims 34 and 36 **characterized in that** the fillers preblend material consists of 35% alumino-siliceous material / 65 % filler , by dry weight.

37. PRODUCT according to any one of claims 34 to 36 **characterized in that** it comprises:

a) at least a " carbonate-based "filler"" as defined in any of the preceding claims and at least an aluminosiliceous material as defined in any of the preceding claims, what provides a "fillers blend"
b) and wherein the said "fillers blend" has been treated with an efficient amount of at least a superplastifier as defined in any of the preceding claims.

38. Product according to any any one of claims 34 to 37 **characterized in that** the said superplastifier is selected among polycarboxylates, polycarboxylate ethers, or products manufactured from sulfonated naphthalene condensate or sulfonated melamine formaldehyde.

39. Product according to claim 37 and 38 **characterized in that** the said superplastifier is of the polycarboxylate ether type.

40. Product according to any any one of claims 37 to 39 **characterized in that** the dosage in superplastifier(s) is ranging from 0.03 or 0.05 to 2% to 3% dry weight of cement , or 0.3 to 2 - 3 kg for 100 kg of cement, preferably 0.8 to 1.2 kg /100 kg of cement, on a DRY / DRY basis or, in laboratory conditions, ranges from 0.05 to 0.1 % by weight of the carbonate (DRY) that is 0.1 to 0.3 kg /100 kg of cement, on a DRY / DRY basis.

41. PRODUCT according to any one of claims 34 to 40 **characterized in that** it comprises:

a) at least a " carbonate-based "filler"" as defined in any of the preceding claims and at least an aluminosiliceous material as defined in any of the preceding claims, what provides a "fillers blend"

b) and wherein the said "fillers blend" has been treated with an efficient amount of at least a superplastifier as defined in any of the preceding claims

- and optionally at least a plastifier and optionally a fluidifier as defined in any of the preceding claims. And **characterized in that** it further contains additives such as air entrainment agents, setting retarders or accelerators.

42. Product according to any one of claims 34 to 41 **characterized in that** the fillers preblend material consists of 35% alumino-siliceous material / 65 % filler , by dry weight.

43. "CEMENT COMPOSITIONS" (in the wide sense defined) comprising the said "products" or "fillers blend" of fillers and aluminosiliceaous material, treated with at least a superplastifier, and optionally a fluidifier and optionally a plastifier, as defined in any of the preceding claims.

44. USE of the said "Fillers(s) blends" and cement composition according to the preceding claims in the cement industry such as building, construction, offshore cementing, oilfield and geothermal industries or for manufacturing "cement elements or products" for use in the sais industries.

45. "CEMENT ELEMENTS or CEMENT PRODUCTS" obtained from the said "cements compositions", such as construction or building blocks.

**Fig. 1**

**Fig. 2**

**Fig. 3**

**Fig. 4**

**Fig. 5**

**Fig. 6**

**Fig. 7**

**Fig. 8**

Fig. 9

Fig. 10

Fig. 11

Fig. 12

**Fig. 13**

**Fig. 14**

**Fig. 15**

**Fig. 16**

Fig. 17

**Europäisches Patentamt**
**European Patent Office**
**Office européen des brevets**

# EUROPEAN SEARCH REPORT

Application Number

EP 12 00 1307

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 145 869 A1 (LAFARGE SA [FR]) 20 January 2010 (2010-01-20) * the whole document * | 1-45 | INV. C04B28/02 C04B40/00 C04B20/10 |
| X | WO 2007/057510 A1 (NORDKALK OYJ ABP [FI]; VIRTANEN PENTTI [FI]) 24 May 2007 (2007-05-24) * the whole document * | 1-45 | |
| X | EP 2 145 868 A1 (LAFARGE SA [FR]) 20 January 2010 (2010-01-20) * the whole document * | 1-45 | |
| X | FR 2 910 479 A1 (COATEX SAS [FR]) 27 June 2008 (2008-06-27) * the whole document * | 1-45 | |
| X | DE 32 46 232 A1 (BLEECK JOERG DIPL ING [DE]) 14 June 1984 (1984-06-14) * the whole document * | 1-45 | |
| | | | **TECHNICAL FIELDS SEARCHED (IPC)** C04B |

The present search report has been drawn up for all claims

| Place of search | Date of completion of the search | Examiner |
|---|---|---|
| Munich | 10 September 2012 | Gattinger, Irene |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 00 1307

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2012

| Patent document cited in search report | | | Publication date | Patent family member(s) | | Publication date |
|---|---|---|---|---|---|---|
| EP 2145869 | A1 | | 20-01-2010 | NONE | | |
| WO 2007057510 | A1 | | 24-05-2007 | CN 101400621 A | | 01-04-2009 |
| | | | | EP 1954644 A1 | | 13-08-2008 |
| | | | | FI 122360 B1 | | 30-12-2011 |
| | | | | JP 2009515805 A | | 16-04-2009 |
| | | | | US 2009090278 A1 | | 09-04-2009 |
| | | | | WO 2007057510 A1 | | 24-05-2007 |
| EP 2145868 | A1 | | 20-01-2010 | AU 2009272285 A1 | | 21-01-2010 |
| | | | | CA 2731199 A1 | | 21-01-2010 |
| | | | | CN 102026932 A | | 20-04-2011 |
| | | | | EP 2145868 A1 | | 20-01-2010 |
| | | | | EP 2303792 A2 | | 06-04-2011 |
| | | | | JP 2011528313 A | | 17-11-2011 |
| | | | | US 2011083585 A1 | | 14-04-2011 |
| | | | | WO 2010007534 A2 | | 21-01-2010 |
| FR 2910479 | A1 | | 27-06-2008 | CN 101563428 A | | 21-10-2009 |
| | | | | EP 2125966 A1 | | 02-12-2009 |
| | | | | FR 2910479 A1 | | 27-06-2008 |
| | | | | JP 2010513738 A | | 30-04-2010 |
| | | | | KR 20090089861 A | | 24-08-2009 |
| | | | | RU 2009127696 A | | 27-01-2011 |
| | | | | US 2010095869 A1 | | 22-04-2010 |
| | | | | WO 2008084313 A1 | | 17-07-2008 |
| DE 3246232 | A1 | | 14-06-1984 | DE 3246232 A1 | | 14-06-1984 |
| | | | | EP 0115586 A1 | | 15-08-1984 |
| | | | | US 4606503 A | | 19-08-1986 |

EPO FORM P0459

For more details about this annex : see Official Journal of the European Patent Office, No. 12/82

## REFERENCES CITED IN THE DESCRIPTION

**Patent documents cited in the description**

- EP 0663892 A, CHRYSO
- FR 2815627
- FR 2815629
- WO 2008107790 A
- EP 0099954 A

- EP 10008803 A
- WO 2004041882 A
- US 6666953 B
- US 5739212 A